# EUROPEAN PATENT SPECIFICATION

(11) **EP 4 410 082 B1**
(45) Date of publication and mention of the grant of the patent: **18.11.2026**
(21) Application number: 24152463.6
(22) Date of filing: 17.01.2024
(51) Int. Cl.: A01C 7/10, A01C 7/20, A01C 21/00, A01B 79/00

(54) **AGRICULTURAL SYSTEM**
LANDWIRTSCHAFTLICHES SYSTEM
SYSTÈME AGRICOLE

(30) Priority: 02.02.2023 US 202318163526
(43) Date of publication of application: 07.08.2024
(73) Proprietor: Deere & Company, Moline, IL 61265 (US)
(72) Inventor: STEELE, Michael C., Mannheim (DE); YANKE, Bryan R., Mannheim (DE); BURNLEY, Ryan C., Mannheim (DE); HERMAN, Carolyn, Mannheim (DE); PETERSEN, Scott, Mannheim (DE); BILL, Randall K., Mannheim (DE); WICKMAN, Hanna J., Mannheim (DE); WESTPHAL, Dustin J., Mannheim (DE); WAYNE, Natalie, Mannheim (DE); OETTING, Amy, Mannheim (DE)
(74) Representative: Reichert, Christian

(56) References cited:
- DE-A1- 102011 010 100
- US-A1- 2017 094 894
- US-A1- 2020 008 347

## Description

### FIELD OF THE DESCRIPTION

The present description relates to mobile machines, particularly mobile agricultural machines configured to perform operations at a field.

### BACKGROUND

There are a wide variety of different type of agricultural machines. Some such agricultural machines include agricultural planting machines such as row crop planters, grain drills, air seeders or the like.

As one example, a plurality of row units can be mounted to the agricultural planting machine, such as a planter or seeder. The agricultural planting machine often includes an implement that is towed by a towing machine (or vehicle), such as a tractor, over soil where seed is planted in the soil, using the row units. The row units on the planting machine follow the ground profile by using a combination of a down force assembly that imparts a down force to the row unit to push furrow openers into the ground and open a furrow and gauge wheels to set depth of penetration of the furrow openers.

As one example, US 2017/0094894 A1 discloses an agricultural machine, where a variable is sensed that is indicative of a performance of the machine. A rate of change of the sensed variable is deter-mined, and a control signal is generated for controlling an agricultural vehicle, based upon the rate of change in the value of the sensed variable.

A further example is disclosed in DE 10 2011 010 100 A1 with a method for an agricultural system for detecting and evaluating uniformity- or quality parameters of crop flow on occasionally yielded seed grains. A control signal is generated for a device for varying and influencing the running speed of a tractor in dependence of the detected parameters. The control signal and further signals are exchanged through a data bus, particularly through a controller area network bus. The disclosure further relates to a device for controlling the running speed of the tractor with a towed single grain sowing device.

Another example is described in US 2020/0008347 A1, disclosing a system and method for monitoring an agricultural implement. The system includes a monitor device, a communication module and a display device. The monitor device is in electrical communication with a plurality of sensors monitoring the operation of agricultural implement. The implement sensors generate "as-applied" data. The as-applied data is processed and transmitted to a display device via a communication module. The display device renders maps representing the as-applied data. The generated maps may be accessed and displayed as map overlays on a display device with a common view characteristic.

The seed can be carried, prior to being planted, by a container or tank on the row unit itself, or it can be pneumatically delivered to the row unit by a cart that is also pulled by the towing vehicle. In either case, the seed can be delivered to the furrow by a seed delivery system. The furrow can then be closed over the delivered seed by a furrow closer.

The discussion above is merely provided for general background information and is not intended to be used as an aid in determining the scope of the claimed subject matter.

### SUMMARY

Systems and methods for optimizing a travel speed of a mobile agricultural machine provide for detecting one or more job quality characteristic values, detecting a travel speed of the mobile agricultural machine, determining an optimal travel speed for the mobile agricultural machine based on the one or more job quality characteristic values and a job quality characteristic threshold value for each of the one or more job quality characteristic values, and generating a control signal based on the determined optimal travel speed for the mobile agricultural machine and the detected travel speed of the mobile agricultural machine.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The invention is defined by the appended claims. The claimed subject matter is not limited to implementations that solve any or all disadvantages noted in the background.

### BRIEF DESCRIPTION OF THE DRAWINGS

FIG. 1 is a top view of one example of a mobile agricultural planting machine as a mobile agricultural machine.
FIG. 2 is a side view showing one example of a row unit of the agricultural planting machine illustrated in FIG. 1.
FIG. 3 is a side view showing another example of a row unit of the agricultural planting machine illustrated in FIG. 1.
FIG. 4 is a perspective view of a portion of a seed metering system.
FIG. 5 shows an example of a seed delivery system that can be used with a seed metering system.
FIG. 6 shows an example of a seed delivery system that can be used with a seed metering system.
FIG. 7 is a block diagram showing some portions of an agricultural system, including a mobile agricultural machine, in more detail, according to some examples of the present disclosure.
FIG. 8 is a block diagram showing some portions of the agricultural system shown in FIG. 7 in more detail.
FIG. 9 shows a flow diagram illustrating one example of operation of an agricultural system in optimizing speed of an agricultural machine.
FIGS. 10A-H are pictorial illustrations that show example displays.
FIG. 11 is partial pictorial partial diagrammatic illustration that shows example displays.
FIG. 12. is a partial pictorial partial diagrammatic illustration that shows example displays.
FIG. 13 is a partial pictorial partial diagrammatic illustration that shows example displays.
FIGS. 14A-E are pictorial illustrations that show example displays.
FIG. 15 is a partial pictorial partial diagrammatic illustration that shows example displays.
FIGS. 16A-H are pictorial illustrations that show example displays.
FIGS. 17A-H are pictorial illustrations that show example displays.
FIG. 18 is a pictorial illustration that shows an example display.
FIG. 19 is a partial pictorial partial diagrammatic illustration that shows example displays.
FIG. 20 is a partial pictorial partial diagrammatic illustration that shows example displays.
FIG. 21 is a partial pictorial partial diagrammatic illustration that shows example displays.
FIG. 22 is a partial pictorial partial diagrammatic illustration that shows example displays
FIG. 23 is a block diagram showing one example of a mobile machine, such as a mobile agricultural planting machine, in communication with a remote server environment.
FIGS. 24-26 show examples of mobile devices that can be used in an agricultural system.
FIG. 27 is a block diagram showing one example of a computing environment that can be used in an agricultural system.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

In one example, the present description relates to systems and methods for determining an optimal speed of travel of a mobile agricultural machine as it performs an operation. For example, the systems and methods described herein provide for determining if the travel speed of the mobile agricultural machine can (or should) be increased based on various speed limitations, such as job quality characteristics, system limitations, environmental limitations, and external limitations.

As discussed above, agricultural planting machines travel over soil where seed is delivered to furrows opened by the agricultural planting machines. In the past, agricultural planting machines were, in order to perform adequately, limited to speeds of 8 to 12 kilometre per hour (km/ h) ( 5 to 7 miles per hour (mph)), and sometimes even lower speeds. Today there are "high-speed" agricultural planting machines that are capable of providing satisfactory job quality while traveling at speeds of 16 km/h (10 mph) or higher. The increased speed capability allows the operators to finish their planting operations more quickly while still maintaining acceptable job quality. However, some operators are hesitant to operate the agricultural planting machines at or nearer to the top end of their speed capability for a variety of reasons. For example, there are various job quality characteristics that must be monitored during the planting operation to ensure acceptable planting, such as, but not limited to, down force margin, percent ground contact, implement ride quality, seed singulation, seed population, and seed spacing. Sensors on the agricultural planting machine can detect variables indicative of the various job quality characteristics and provide real-time (or near real-time) feedback to the operator. However, the operator may be unwilling or uncomfortable with monitoring the feedback from the sensors while operating at or nearer to the top-end speed capability of the agricultural planting machine. Additionally, job quality performance may be less variable at lower speeds or at least the area of the field suffering from less-than-ideal job quality performance will be less at lower speeds. In addition to job quality characteristics, there are a variety of other limitations that may need to be taken into account when determining the optimal travel speed of the agricultural planting machine, such as system limitations, environmental limitations, as well as external limitations. Thus, for a variety of reasons, operators today may not be utilizing the full speed capabilities of their agricultural planting machines.

Provided herein are systems and methods for determining the optimal speed of a mobile agricultural machine, such as a mobile agricultural planting machine. For example, the systems and methods discussed herein determine, as the optimal speed, the speed at which the mobile agricultural machine can (or should) travel at given the various limitations, the job quality characteristics, system limitations, environmental limitations, external limitations, etc. The systems and methods discussed herein can provide for automatically controlling the speed of the mobile agricultural machine based on the determined optimal speed. Additionally, or alternatively, the systems and methods discussed herein can provide for automatically surfacing an indication, such as visual, haptic, or audible, presentation to the operator (or other user) that indicates the determined optimal speed or a control recommendation (e.g., increase speed, decrease speed, maintain speed, etc.), or both. In this way, a fuller range of the speed capabilities of the mobile agricultural machine, such as a mobile agricultural planting machine, can be utilized more consistently while still accounting for the various limitations, such as job quality, system limitations, environmental limitations, external limitations, etc. Operators (and other users) can be more confident that the various factors will be accounted for while the mobile agricultural machines are operating at the higher ends of their speed ranges.

While some examples described herein proceed with respect to mobile agricultural machines in the form of mobile agricultural planting machines, it will be appreciated that the systems and methods described herein are applicable to various other types of mobile agricultural machines including, but not limited to, mobile agricultural tillage machines, mobile agricultural spraying machines, mobile agricultural harvesting machines, as well as various other types of mobile agricultural machines. Additionally, while some examples described herein proceed with respect to certain types of mobile agricultural planting machines, such as row unit planters, it will be understood that the systems and methods described herein are applicable to various other types of mobile agricultural planting machines such as mobile agricultural seeders, such as mobile agricultural air seeders, mobile agricultural drills, as well as various other types of mobile agricultural planting machines.

It will be noted that worksite and field are used interchangeably herein. It will be understood that a field constitutes a worksite, but that a worksite may comprise multiple fields or other item(s) which are not fields.

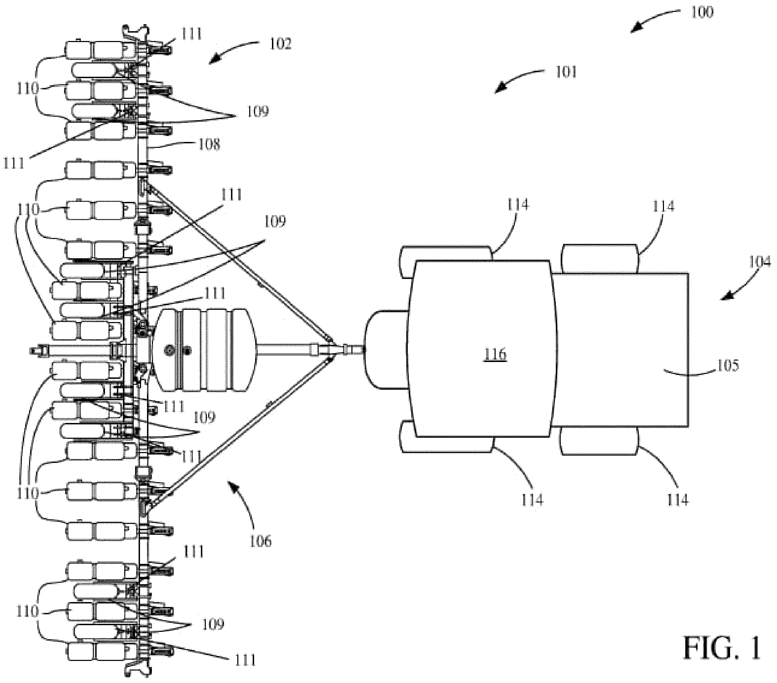

FIG. 1 is a top view that illustrates one example of a mobile agricultural machine 100 as a mobile agricultural planting machine 101. Agricultural planting machine 101 includes a towing or support machine 104 (illustratively a tractor, though other types of towing or support machines can be used) and a planting implement 102 (illustratively a row unit planter, though other types of planting machines can be used such as an air seeder or a drill). Planting implement 102 includes a frame 105 configured to support planting implement 102 relative to towing machine 104. Frame 106 includes a toolbar 108 that supports a plurality of row units 110 mounted to toolbar 108. Planting implement 102 also includes a plurality of ground engaging traction elements 109, illustratively shown as wheels, though in other examples could comprises other types of ground engaging traction elements, such as tracks. Ground engaging traction elements 109 are moveably coupled to a frame of planting implement 102 and are actuatable, via actuators 111, to adjust a height of planting implement 102 (e.g., toolbar 108) above a surface of the field over which the planting implement 102 is towed.

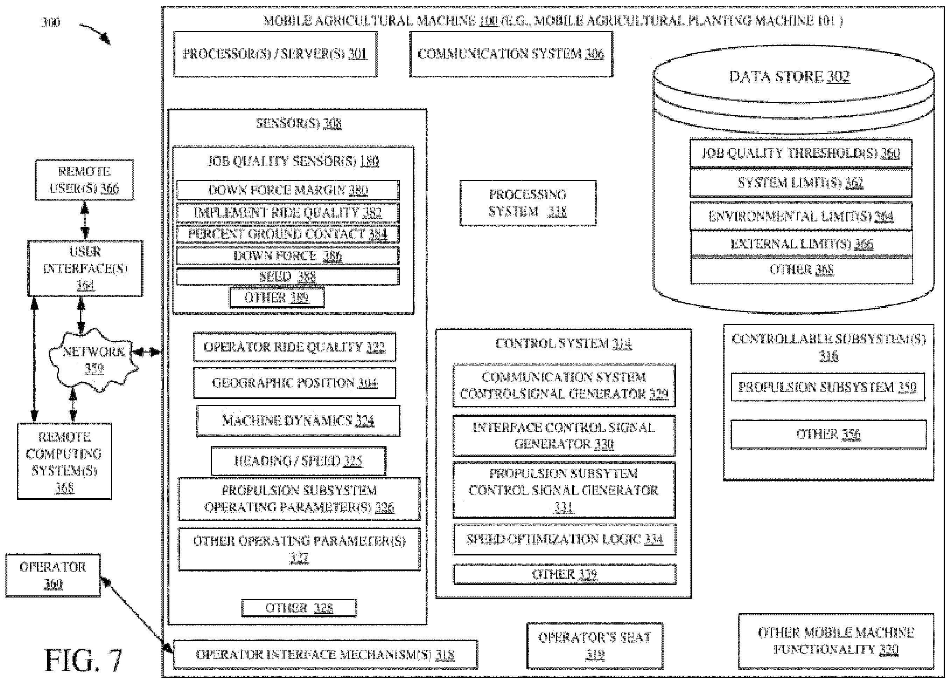

Towing machine 104 includes ground engaging traction elements 114, such as wheels or tracks. Towing machine 104 also includes an operator compartment 116, such as a cab. Operator compartment 116 can include a variety of different operator interface mechanisms (e.g., 318 shown in FIG. 7) for controlling agricultural planting machine 101. Additionally, the operator compartment 116 can include a seat for the operator. Towing machine 104 also includes a powerplant compartment 105 which may house a powerplant (e.g., an internal combustion engine, other). The powerplant is a component of the propulsion subsystem (e.g., 350 shown in FIG. 7) of the agricultural planting machine 101. The propulsion subsystem illustratively propels the agricultural planting machine 101 at variable speeds.

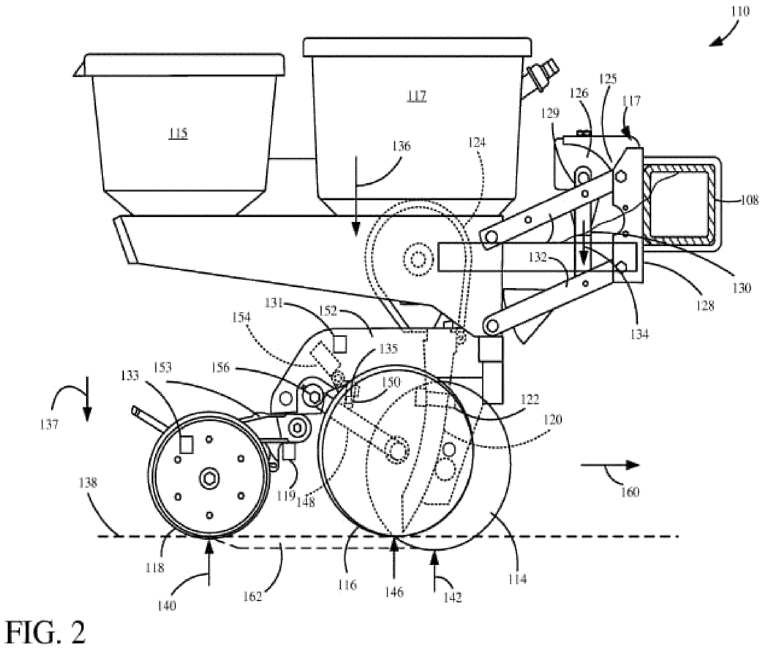

FIG. 2 is a side view showing one example of a row unit 106. In the example shown in FIG. 2, row unit 106 illustratively includes a chemical tank 115 and a seed storage tank 117. It also illustratively includes a furrow opener 114 (e.g., a double disk opener) that opens a furrow 162, a set of gauge wheels 116, and a furrow closer 118 (e.g., a set of closing wheels) that close furrow 162. Seeds from tank 117 are fed by gravity into a seed meter 124. The seed meter 124 controls the rate which seeds are dropped into a seed tube 120 or other seed delivery system, such as a brush belt or flighted brush belt (both shown below) from seed storage tank 117. The seeds can be sensed by a seed sensor 119 or 122, or both.

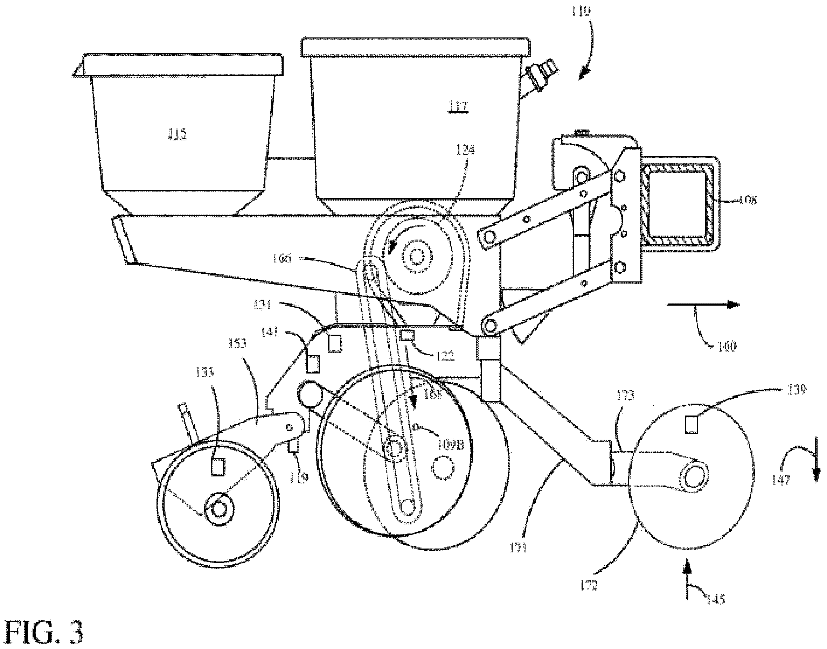

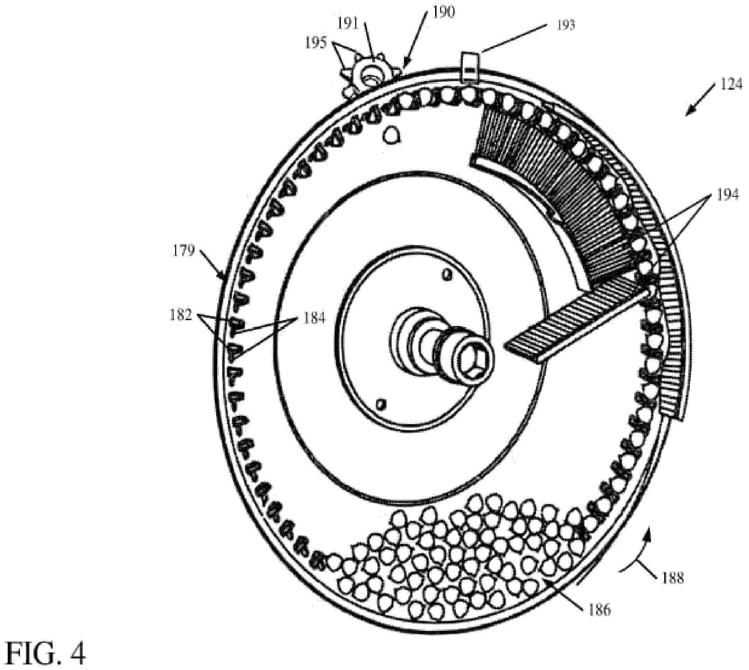

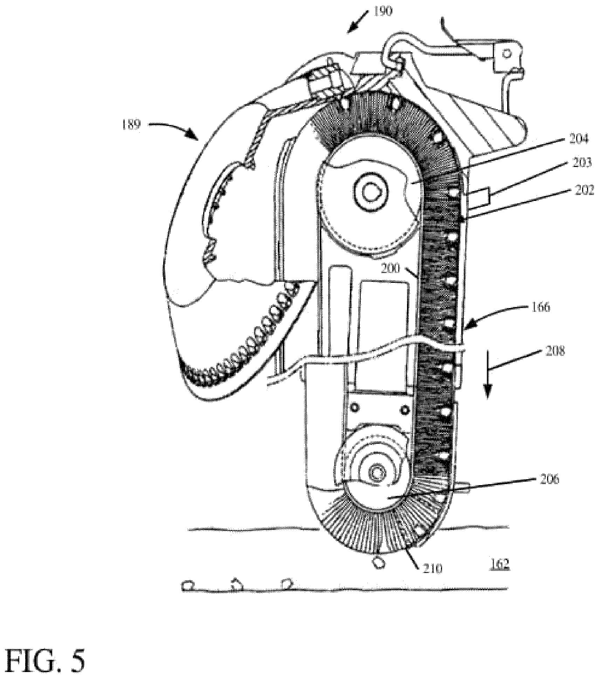

Some parts of the row unit 106 will now be discussed in more detail. First, it will be noted that there are different types of seed meters 124, and the one that is shown is shown for the sake of example only and is described in greater detail below with respect to FIG. 4. For instance, in one example, each row unit 110 need not have its own seed meter. Instead, metering or other singulation or seed dividing techniques can be performed at a central location, for groups of row units 110. The metering systems can include rotatable disks, rotatable concave or bowl-shaped devices, among others. The seed delivery system can be a gravity drop system (such as seed tube 120 shown in FIG. 2) in which seeds are dropped through the seed tube 120 and fall (via gravitational force) through the seed tube and out the outlet end 121 into the furrow (or seed trench) 162. Other types of seed delivery systems are assistive systems, in that they do not simply rely on gravity to move the seed from the metering system into the ground. Instead, such systems actively capture the seeds from the seed meter and physically move the seeds from the meter to a lower opening where the exit into the ground or trench. Some examples of these assistive systems are described in greater detail below with respect to FIGS. 3 and 5.

A downforce generator or actuator 126 is mounted on a coupling assembly 128 that couples row unit 110 to toolbar 108. Downforce actuator 126 can be a hydraulic actuator, a pneumatic actuator, a spring-based mechanical actuator or a wide variety of other actuators. In the example shown in FIG. 2, a rod 130 is coupled to a parallel linkage 132 and is used to exert an additional downforce (in the direction indicated by arrow 134) on row unit 110. The total downforce (which includes the force indicated by arrow 134 exerted by actuator 126, plus the force due to gravity acting on the row unit 110, and indicated by arrow 136) is offset by upwardly directed forces acting on closing wheels 118 (from ground 138 and indicated by arrow 140) and furrow opener 114 (again from ground 138 and indicated by arrow 142) as well as upward forces on other components of row unit 110 (such as an upward force from ground 145 on a row cleaner 172 shown in FIG. 3). The remaining force (the sum of the force vectors indicated by arrows 134 and 136, minus the force indicated by arrows 140 and 142) and the force on any other ground engaging component on the row unit (e.g., force 145 shown in FIG. 3), is the differential force indicated by arrow 146. The differential force may also be referred to herein as downforce margin. The force indicated by arrow 146 acts on the gauge wheels 116. This load can be sensed by a gauge wheel load sensor 135 which may be located anywhere on row unit 106 where it can sense that load. It can also be placed where the sensor 135 may not sense the load directly, but a characteristic indicative of that load. For example, it can be disposed near a set of gauge wheel control arms (or gauge wheel arm) 148 that movably mount gauge wheels to shank 152 and control an offset between gauge wheels 116 and the disks in double disk opener 114 to control planting depth. Percent ground contact is a measure of a percentage of time that the downforce margin is equivalent to the sum of the force indicated by arrow 134 and arrow 136. Said another way, percent ground contact is a measure of a percentage of time that there is no ground resistance force acting against the gauge wheels 116 (indicating that the gauge wheels are out of contact with the ground and thus the furrow opener is out of contact with the ground). The percent ground contact is calculated on the basis of sensor data provided by the gauge wheel load sensor 135. In one example, the gauge wheel load sensor 135 is incorporated into the mechanical stop 150.

In addition, there may be other separate and controllable downforce actuators, such as one or more of a closing wheel downforce actuator 153 that controls the downforce exerted on furrow closer 118. Closing wheel downforce actuator 153 can be a hydraulic actuator, a pneumatic actuator, a spring-based mechanical actuator or a wide variety of other actuators. The downforce exerted by closing wheel downforce actuator 153 is represented by arrow 137. It will be understood that each row unit 106 can include the various components described with reference to FIGS. 2-6.

In the illustrated example, arms (or gauge wheel arms) 148 illustratively abut a mechanical stop (or arm contact member or wedge) 150. The position of mechanical stop 150 relative to shank 152 can be set by a planting depth actuator assembly 154. Control arms 148 illustratively pivot around pivot point 156 so that, as planting depth actuator assembly 154 actuates to change the position of mechanical stop 150, the relative position of gauge wheels 116, relative to the furrow opener 114, changes, to change the depth at which seeds are planted (e.g., the planting depth).

In operation, row unit 110 travels generally in the direction indicated by arrow 160. The furrow opener 114 opens the furrow 162 in the soil 138, and the depth of the furrow 162 is set by planting depth actuator assembly 154, which, itself, controls the offset between the lowest parts of gauge wheels 116 and furrow opener 114. Seeds are dropped through seed tube 120 into the furrow 162 and furrow closer 118 closes the soil.

As the seeds are dropped through seed tube 120, they can be sensed by seed sensor 122. Some examples of seed sensor 122 are an optical sensor or a reflective sensor, and can include a radiation transmitter and a receiver. The transmitter emits electromagnetic radiation and the receiver the detects the radiation and generates a signal indicative of the presences or absences of a seed adjacent to the sensor. These are just some examples of seed sensors. Row unit 106 also includes furrow sensor 119 can be used in addition to, or instead of, seed sensor 122. Furrow sensor 119 performs in-furrow sensing, including in-furrow seed sensing. Some examples of furrow sensor 119 are an optical sensor or a reflective sensor or a camera. Seed sensors 119 or 122, or both, can detect seed singulation. Seed singulation refers to one seed being delivered at a time. Bunching of seeds can lead to lower resulting yields at a given location as the multiple seeds will compete over the same resources at a given location. Seed sensors 119 or 122, or both, can detect seed population. Seed population refers to the number of seeds planted over a given area. Seed sensors 119 or 122, or both, can detect seed spacing. Seed spacing refers to the space between seeds being planted.

In addition to seed sensors and furrow sensors, the individual row units 106 can include a wide variety of different types of sensors, such as different types of ground engagement sensors, some examples of which are illustrated in FIGS. 2-3. For instance, ground engagement sensors can include implement ride quality sensor 131, such as an accelerometer that senses acceleration (bouncing) of row unit 110 (or implement 102). In the example shown in FIG. 2, accelerometer 131 is shown mounted to shank 152. This is only an example. In other examples, accelerometer 131, or another accelerometer 131, can be mounted in other places as well, such as on toolbar 108 or frame 106. In some examples, accelerometer 131 can be a single axis or a multi-axis (e.g., three axis) accelerometer. In some examples, accelerometer 131 is part of an inertial measurement unit which senses, in addition to acceleration of row unit 110, other characteristics such as position and orientation (e.g., pitch, roll, and yaw). For example, ground engagement sensors can include machine dynamics sensors 141 that sense machine dynamics characteristics (e.g., pitch, roll, and yaw) of each row unit 110 or of planter implement 102. Machine dynamics sensors 141 can include inertial measurement units, which can include, among other things (e.g., gyroscopes, magnetometers, etc.), an accelerometer, such as accelerometer 131. Thus, while implement ride quality sensors 131 and machine dynamics sensors 141 are shown as separate, in some examples, ride quality and machine dynamics may be sensed by the same sensor system. Additionally, machine dynamics sensors 141 are shown mounted to shank 152, in other examples, machine dynamics sensors 141 can be mounted in other places as well, such as on toolbar 108 or frame 106. Ground engagement sensors can also include one or more closing wheel downforce sensors 133 which can be used to detect down force margin and percent ground contact at the furrow closer 118. Ground engagement sensors can also include one or more gauge wheel down force sensors 135 which can be used to detect down force margin and percent ground contact at the gauge wheels 116.

As an illustrative example, down force actuator 126 can apply a down force of 90 kg (200 pounds) (as represented by arrow 134), the weight of the row unit 106 may be 45 kg (100 pounds) (as represented by arrow 136), and the ground resistance (or force applied on the gauge wheels 116 by the ground) may be 68 kg (150 pounds) (as represented by arrow 146). Thus, the down force margin at the gauge wheels is the difference between total down force of 136 kg (300 pounds) (sum of 134 and 136) (90 kg (200 pounds) applied down force and 45 kg (100 pounds) weight of the row unit) and the ground resistance of 68 kg (150 pounds). Thus, in the example, the down force margin is 68 kg (150 pounds). Over a span of time, the percent ground contact can be detected by calculating a percentage of time that the downforce margin (as detected by down force sensors 135) is equivalent to the total down force. Thus, for a span of time T₁ to T₁₀ the down force margin may have measured zero once (e.g., at T₆). Thus, the percent ground contact for the span of time T₁ to T₁₀ is 90%.

FIG. 3 is similar to FIG. 2, and similar items are similarly numbered. However, instead of the seed delivery system being a seed tube 120 which relies on gravity to move the seed to the furrow 162, the seed delivery system shown in FIG. 3 is an assistive seed delivery system 166. Assistive seed delivery system 166 also illustratively has a seed sensor 122 disposed therein. Seed sensor 119 can be used in addition to, or instead of, seed sensor 122. Seed sensor 119 performs in-trench sensing, including in-trench seed sensing. Assistive seed delivery system 166 captures the seeds as they leave seed meter 124 and moves them in a direction indicated by arrow 168 toward furrow 162. System 166 has an outlet end 170 where the seeds exit system 166 into furrow 162 where the again reach their final seed position. Additionally, FIG. 3 illustrates that row unit 110 can include a row cleaner 172 that is coupled to a control arm 171. Control arm 171 is also pivotally (or otherwise moveably) coupled to shank 152. A down force generator or actuator 173 (e.g., pneumatic actuator, hydraulic actuator, electric actuator, etc.) can also be used to control a down force applied to row cleaner 172. The down force exerted on row cleaner 172 is indicated by arrow 147. Ground engagement sensors can also include one or more row cleaner down force sensors 137 which can be used to detect downforce margin and percent ground contact at the row cleaner 172.

FIG. 3 also illustrates that an upwardly directed force 145 from ground resistance may act upon row cleaner 172. The force 145 may be considered when calculating the downforce margin as well as percent ground contact.

FIG. 4 shows one example of a rotatable mechanism that can be used as part of the seed metering system (or seed meter) 124. The rotatable mechanism includes a rotatable disc, or concave element, 179. Concave element 179 has a cover (not shown) and is rotatably mounted relative to the frame of row unit 106. Rotatable concave element 179 is driven by a motor (not shown) and has a plurality of projections or tabs 182 that are closely proximate corresponding apertures 184. A seed pool 186 is disposed generally in a lower portions of an enclosure formed by rotating concave element 179 and its corresponding cover. Rotatable concave element 179 is rotatably driven by its motor (such as an electric motor, a pneumatic motor, a hydraulic motor, etc.) for rotation generally in the direction indicated by arrow 188, about a hub. A pressure differential is introduced into the interior of the metering mechanism so that the pressure differential influences seeds from seed pool 186 to be drawn to apertures 184. For instance, a vacuum can be applied to draw the seeds from seed pool 186 so that they come to rest in apertures 184, where the vacuum holds them in place. Alternatively, a positive pressure can be introduced into the interior of the metering mechanism to create a pressure differential across apertures 184 to perform the same function.

Once a seed comes to rest in (or proximate) an aperture 184, the vacuum or positive pressure differential acts to hold the seed within the aperture 184 such that the seed is carried upwardly generally in the direction indicated by arrow 188, from seed pool 186, to a seed discharge area 190. It may happen that multiple seeds are residing in an individual seed cell. In that case, a set of brushes or other members 194 that are located closely adjacent the rotating seed cells tend to remove the multiple seeds so that only a single seed is carried by each individual cell. Additionally, a seed sensor 193 can also illustratively be mounted adjacent to rotating element 189. Seed sensor 193 detects and generates a signal indicative of seed presence.

Once the seeds reach the seed discharge area 190, the vacuum or other pressure differential is illustratively removed, and a positive seed removal wheel or knock-out wheel 191, can act to remove the seed from the seed cell. Wheel 191 illustratively has a set of projections 195 that protrude at least partially into apertures 184 to actively dislodge the seed from those apertures. When the seed is dislodged (such as seed 171), it is illustratively moved by the seed tube 120, seed delivery system 166 (some examples of which are shown above in FIGS. 2-3 and below in FIGS. 5-6) to the furrow 162 in the ground.

FIG. 5 shows an example where the rotating element 189 is positioned so that its seed discharge area 190 is above, and closely proximate, assistive seed delivery system 166. **In** the example shown in FIG. 5, assistive seed delivery system 166 includes a transport mechanism such as a belt 200 with a brush that is formed of distally extending bristles 202 attached to belt 200 that act as a receiver for the seeds. Belt 200 is mounted about pulleys 204 and 206. One of pulleys 204 and 206 is illustratively a drive pulley while the other is illustratively an idler pulley. The drive pulley is illustratively rotatably driven by a conveyance motor (not shown), which can be an electric motor, a pneumatic motor, a hydraulic motor, etc. Belt 200 is driven generally in the direction indicated by arrow 208

Therefore, when seeds are moved by rotating element 189 to the seed discharge area 190, where they are discharged from the seed cells in rotating element 189, they are illustratively positioned within the bristles 202 by the projections 182 that push the seed into the bristles. Assistive seed delivery system 166 illustratively includes walls that form an enclosure around the bristles, so that, as the bristles move in the direction indicated by arrow 208, the seeds are carried along with them from the seed discharge area 190 of the metering mechanism, to a discharge area 210 either at ground level, or below ground level within a trench or furrow 162 that is generated by the furrow opener 114 on the row unit 110.

Additionally, a seed sensor 203 is also illustratively coupled to assistive seed delivery system 166. As the seeds are moved in bristles 202 past sensor 203, sensor 203 can detect the presence or absence of a seed. Sensor 203 can be similar to sensor 122. Some examples of seed sensor 203 includes an optical sensor or reflective sensor.

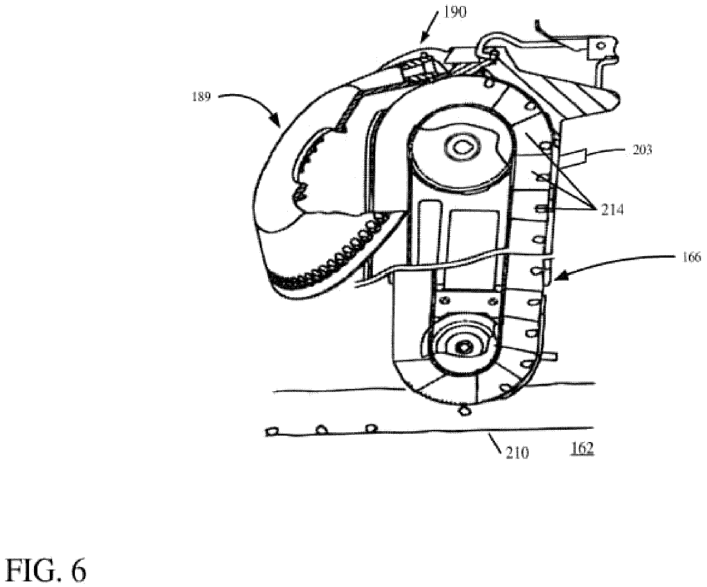

FIG. 6 is similar to FIG. 5, except that seed delivery system 166 is not formed by a belt with distally extending bristles. Instead, it is formed by a flighted belt (transport mechanism) in which a set of paddles 214 form individual chambers (or receivers), into which the seeds are dropped, from the seed discharge area 190 of the metering mechanism. The flighted belt moves the seeds from the seed discharge area 190 to the exit end 210 of the flighted belt, within the trench or furrow 162.

There are a wide variety of other types of seed delivery systems as well, that include a transport mechanism and a receiver that receives a seed. For instance, they include dual belt delivery systems in which opposing belts receive, hold and move seeds to the furrow, a rotatable wheel that has sprockets which catch seeds from the metering system and move them to the furrow, multiple transport wheels that operate to transport the seed to the furrow, an auger, among others.

FIG. 7 is a block diagram showing some portions of an agricultural system architecture 300. FIG. 7 shows that agricultural system architecture 300 includes mobile machine 100 (e.g., mobile agricultural planting machine 101), one or more remote computing systems 368, one or more remote user interfaces 364, and network 359. Mobile machine 100, itself, illustratively includes one or more processors or servers 301, data store 302, geographic position sensor 304, communication system 306, one or more sensors 308 that sense one or more characteristics, and a processing system 338 that processes the sensors data (e.g., sensor signals, images, etc.) generated by sensors 308 to generate processed sensor data. The sensors 308 generate values corresponding to the sensed characteristics. Mobile machine 100 also includes control system 314, one or more controllable subsystems 316, and an operator interface mechanism 318. The mobile machine can also include a wide variety of other machine functionality 320.

Sensors 308 illustratively include one or more job quality sensors 180, one or more operator ride quality sensors 322, one or more geographic position sensors 304, one or more machine dynamics sensors 324, one or more heading/speed sensors 325, one or more propulsion subsystem operating parameter(s) sensors 326, one or more other operating parameter(s) sensors 327, and can include various other sensors 328. Job quality sensors 180 illustratively detect characteristics indicative of a quality of the job performed by mobile machine 100 and generate sensor data indicative of the quality of the job. Job quality sensors 180 include one or more down force margin sensors 380 (e.g., 133, 135, 137 etc.), one or more implement ride quality sensors 382 (e.g., 131, etc.), one or more percent ground contact sensors 384 (e.g., 133, 135, 137, etc.), one or more applied downforce sensors 386, seed sensors 388, and can include other types of job quality sensors 389. Thus, job quality sensors 180 provide sensor data indicative of values of one or more job quality characteristics, such as down force margin values, implement ride quality values, percent ground contact values, applied down force values, as well as other job quality characteristic values.

Down force margin sensors 380 detect the difference between total down force (sum of vectors 134 and 136) and the upward force from ground (sum of vectors 142, 145, and 147). Down force margin sensors 380 can include load cells, strain gauges, pressure sensors, as well as various other types of downforce sensors. One example of a down force margin sensor is gauge wheel down force sensor 135 shown in FIGS. 2-3. Other examples can include sensors 133 and 137. To maintain a desired depth of a furrow throughout a planting operation, gauge wheels 116 need to maintain a given (setpoint, threshold, etc.) down force with the soil over which the gauge wheels 116 travel. Variation in the downforce of gauge wheels 116 can indicate inconsistent ground engagement of the gauge wheels 116 with the soil over which they travel and thus variation in the depth of the furrow, as well as various other deleterious effects. As described above, down force margin is the difference between total downforce (sum of applied downforce and weight of row unit 110) and ground resistance.

Implement ride quality sensors 382 detect implement ride quality characteristics, such as an acceleration (bouncing) of row units 110 or planting implement 102, or both. Implement ride quality sensors 382 can include accelerometers, such as 1 to 3 axis accelerometers which sense acceleration (bouncing) of the row units 110 or planting implement 102, in 1 to 3 axes (e.g., the z, or vertical, axis, the y, or front-to-back axis, and/or the x, or side-to-side, axis). In some examples, the accelerometers are part of an inertial measurement unit, which in addition to sensing acceleration, or bouncing, of the planting implement 102 or row units 110, or both, sense various other characteristics such as machine orientation (e.g., pitch, roll, and yaw) with various other sensors, such as gyroscopes. The acceleration or bouncing of planting implement 102 or row units 110, or both, can indicate variation of engagement with the soil over which the agricultural planter or row units 110 are traveling. Variation in engagement with the soil can lead to variation in depth of the furrow, along with various other deleterious effects.

Percent ground contact sensors 384 illustratively sense when the down force margin is equivalent to the total down force (e.g., equivalent to the sum of vectors 134 and 136) which indicates that there is no upward force acting on the gauge wheels 116 and thus, no engagement with the ground. In one example, percent ground contact sensors 384 utilize signals received from other sources, such as downforce margin sensors 380 (such as gauge wheel down force sensors 135). Thus, while percent ground contact sensors 384 as described herein are shown as separate from down force margin sensors 380, in some examples, percent ground contact is derived from signals received from down force margin sensors 380 and subsequent processing (e.g., by processing system 338). Percent ground contact value represents a percentage of time (over a given period of time or over a given distance traveled) that gauge wheels 116 were in contact with the soil. Variation in engagement with the soil can lead to variation in depth of the furrow, along with various other deleterious effects.

Applied downforce sensors 386 illustratively detect a down force applied by downforce subsystems (e.g., actuators 126, 153, 173, etc.). Applied downforce sensors 386 can be in the form of pressure sensors that sense, for instance, a pressure used to apply down force, such as a hydraulic pressure or pneumatic pressure. Applied downforce can be used in the calculation of down force margin. In other examples, applied downforce sensors 386 may sense an operator, user, or control system input that establishes an applied downforce setting. Variance in applied down force may effect the row unit's engagement with the soil which can lead to variation in depth of the furrow, along with various other deleterious effects.

Seed sensors 388 illustratively detect characteristics of seeds within row unit 110 (e.g., within the seed delivery system) or within the furrow 162, or both. Seed sensors can be sensors such as sensors 119, 122, and 203 shown above. In other examples, seed sensors 388 can be other types of sensors. Seed sensors 388 illustratively detect one or more of seed singulation, seed population, and seed spacing.

Other job quality sensors 389 can include a variety of other types of sensors that detect a variety of other job quality characteristics. Further, it will be noted that the quality characteristics and thus the quality characteristic sensors may change with the type of machine. The example shown in FIG. 7 shows mobile machine 100 as a planting machine 101, but in other examples, as previously discussed, mobile machine 100 can be a variety of other types of mobile machines, such as, but not limited to, harvesting machines, spraying machines, tillage machines, etc..

Operator ride quality sensors 322 detect operator ride quality characteristics, such as an acceleration (bouncing) of towing machine 104 or of the operator's seat 319 in cab 116, or both. Operator ride quality sensors 322 can include accelerometers, such as 1 to 3 axis accelerometers which sense acceleration (bouncing) of the towing machine 104 or operator's seat 319, in 1 to 3 axes (e.g., the z, or vertical, axis, the y, or front-to-back axis, and/or the x, or side-to-side, axis). **In** some examples, the accelerometers are part of an inertial measurement unit, which in addition to sensing acceleration, or bouncing, of the towing machine 104 or the operator's seat 319, or both, sense various other characteristics such as machine orientation (e.g., pitch, roll, and yaw) with various other sensors, such as gyroscopes.

Geographic position sensors 304 illustratively sense or detect the geographic position or location of mobile machine 100. Geographic position sensors 304 can include, but are not limited to, a global navigation satellite system (GNSS) receiver that receives signals from a GNSS satellite transmitter. Geographic position sensors 304 can also include a real-time kinematic (RTK) component that is configured to enhance the precision of position data derived from the GNSS signal. Geographic position sensors 304 can include a dead reckoning system, a cellular triangulation system, or any of a variety of other geographic position sensors. Geographic positions sensors 304 can be on towing vehicle 10 or planter 101, or both.

Heading/speed sensors 325 detect a heading and speed at which mobile machine 100 is traversing the worksite during the operation. This can include sensors that sense the movement of ground-engaging traction elements (e.g., wheels or tracks of towing machine 104 or implement 102, or both) or can utilize signals received from other sources, such as geographic position sensor 304. Thus, while heading/speed sensors 325 as described herein are shown as separate from geographic position sensor 304, in some examples, machine heading/speed is derived from signals received from geographic positions sensor 304 and subsequent processing. In other examples, heading/speed sensors 325 are separate sensors and do not utilize signals received from other sources. Heading/speed sensors 325 can include various other types of sensors, such as radar or lidar to detect the speed of mobile machine 100.

Machine dynamics sensors 324 illustratively detect yaw, pitch, and roll of mobile machine 100. Machine dynamics sensors can include inertial measurement units, or individual sensors, such as accelerometers, gyroscopes, and magnetometers.

Propulsion subsystem operating parameter(s) sensors 326 illustratively detect operating parameters of the propulsion subsystem 350, such as, but not limited to, engine or motor speed, propulsion subsystem temperature (e.g., engine or motor temperature), current gear selection, as well as various other propulsion subsystem operating parameters. Engine or motor speed and gear selection can be detected by various types of sensors, such as, but not limited to Hall effect sensors, as well as various other types of known sensors. Engine or motor temperature can be detected by temperature gauges. Sensors 326 can include various other types of sensors.

Other operating parameter(s) sensors 327 illustratively detect other operating parameters of the mobile machine 100, such as, but not limited to, operating speed of the assistive seed delivery system (e.g., 166, etc.), operating speed of the seed metering system (e.g., 124, 189, etc.), detecting if automation modes are engaged, such as automatic guidance (e.g., automatic steering mode). Operating speed of either the seed delivery system or the seed metering system can be detected by a variety of different types of sensors, such as, but not limited to, optical sensors, induction sensors, etc. Detecting whether automation modes are engaged can be software-based (e.g., scan code and status), current or voltage (e.g., switch closed or opened), in the case of touch screen, resistive, surface acoustic wave, or capacitive sensors may also be utilized to detect touch input. These are merely some examples.

Processing system 338 processes the sensor data generated by sensors 308 to generate processed sensor data indicative of one or more characteristics. For example, processing system 338 generates processed sensor data indicative of characteristic values based on the sensor data generated by sensors 308, such as job quality values based on sensor data from one or more job quality sensors 380 (e.g., one or more of down force margin values based on sensor data generated by down force margin sensors 380, implement ride quality values based on sensor data generated by implement ride quality sensors 382, percent ground contact values based on sensor data generated by percent ground contact sensors 384, applied down force values based on sensor data generated by applied down force sensors 386, seed singulation values based on sensor data generated by seed sensors 388, seed population values based on sensor data generated by seed sensors 388, seed spacing values based on sensor data generated by seed sensors 388, etc.). Processing system 338 also processes sensor data generated by other sensors 308 to generate processed sensor data indicative of other characteristic values, for instance one or more of operator ride quality values based on sensor data generated by operator ride quality sensors 322, geographic position values based on sensor data generated by geographic position sensors 324, machine speed (travel speed, acceleration, deceleration, etc.) values based on sensor data generated by heading/speed sensors 325, machine heading values based on sensor data generated by heading/speed sensors 325, propulsion subsystem operating parameter values (e.g., engine or motor speed values, engine temperature values, gear selection values, etc.) based on sensor data generated by propulsion subsystem operating parameter(s) sensors 326, other operating parameter values (e.g., active seed delivery system speed, seed metering system speed, automation mode activation/deactivation values, etc.) based on sensor data generated by other operating parameter(s) sensors 327, as well as various other values based on sensors data generated by various other sensors 328.

It will be understood that processing system 338 can be implemented by one or more processers or servers, such as processors or servers 301. Additionally, processing system 338 can utilize various sensor data processing functionalities, such as sensor data filtering functionalities, noise filtering functionalities, categorization, aggregation, normalization, as well as various other processing functionality. Similarly, processing system 338 can utilize various image processing functionality such as, sequential image comparison, RGB, edge detection, black/white analysis, machine learning, neural networks, pixel testing, pixel clustering, shape detection, as well any number of other suitable image processing and data extraction functionality.

FIG. 7 also shows remote users 366 interacting with mobile machine 100 or remote computing systems 368, or both, through user interfaces mechanisms 364 over network 359. Remote computing systems 368 can be a wide variety of different types of systems, or combinations thereof. For example, remote computing systems 368 can be in a remote server environment. Further, remote computing systems 368 can be remote computing systems, such as mobile devices, a remote network, a farm manager system, a vendor system, or a wide variety of other remote systems. In one example, mobile machine 100 can be controlled remotely by remote computing systems or by remote users 366, or both. As will be described below, in some examples, one or more of the components shown being disposed on mobile machine 100 in FIG. 7 can be located elsewhere, such as at remote computing systems 368. In some examples, user interface mechanisms 364 may include joysticks, levers, a steering wheel, linkages, pedals, buttons, dials, keypads, user actuatable elements (such as icons, buttons, etc.) on a user interface display device, a microphone and speaker (where speech recognition and speech synthesis are provided), among a wide variety of other types of control devices. Where a touch sensitive display system is provided, user 366 may interact with user interface mechanisms 364 using touch gestures. These examples described above are provided as illustrative examples and are not intended to limit the scope of the present disclosure. Consequently, other types of user interface mechanisms 364 may be used and are within the scope of the present disclosure.

FIG. 7 also shows that an operator 360 may operate mobile machine 100. The operator 360 interacts with operator interface mechanisms 318. In some examples, operator interface mechanisms 318 may include joysticks, levers, a steering wheel, linkages, pedals, buttons, dials, keypads, user actuatable elements (such as icons, buttons, etc.) on a user interface display device, a microphone and speaker (where speech recognition and speech synthesis are provided), among a wide variety of other types of control devices. Where a touch sensitive display system is provided, operator 360 may interact with operator interface mechanisms 318 using touch gestures. These examples described above are provided as illustrative examples and are not intended to limit the scope of the present disclosure. Consequently, other types of operator interface mechanisms 318 may be used and are within the scope of the present disclosure. In some examples, mobile machine 100 may operate autonomously and thus no operator is needed. In some examples, even when operating autonomously, and operator may be present (in-cab or remote) to monitor or take over operation.

Data store 302 is operable to store various data that utilizable by other components of mobile machine 100 or agricultural system 300, or both. As illustrated, data store includes one or more job quality thresholds (or targets), one or more system limits 362, one or more environmental limits 364, one or more external limits 366, as well as various other data 368.

Job quality thresholds (or targets) 360 are values that indicate a desired level (or value) for various job quality characteristics, such as threshold (or target) down force margin values, threshold (or target) implement ride quality values, threshold (or target) percent ground contact values, threshold (or target) applied down force values, threshold (or target) seed singulation values, threshold (or target) seed population values, threshold (or target) seed spacing values, as well as threshold (or target) values for various other job quality characteristics. Job quality thresholds (or targets) 360 can be provided by an operator 360, a user 366, a manufacturer, or automatically determined by control system 314. Where, the one or more job quality characteristic values do not satisfy the one or more job quality characteristic thresholds (or targets) the speed of machine 100 may not be increased (and may even be reduced). Where, the one or more job quality characteristic values do satisfy the one or more job quality characteristic thresholds (or targets) the speed of machine 100 may be increased.

System limits 362 are limits on the travel speed of mobile machine 100 put in place by an operator 360 or user 366, limits on the travel speed due to the configuration (or model) of mobile machine 100, or limits on the travel speed due to operating parameters of the mobile machine 100. For example, the particular model or configuration of mobile machine 100 may have a max travel speed during operation, for instance 19 km/h (12 mph) for a particular model of high-speed planting machine 101. In another example, an operator 360 or user 366 may set a preferred speed limit (preferred travel speed threshold value) based on their own preferences. For example, the mobile machine 100 may be able to operate at 16 km/h (10 mph) (e.g., as indicated by speed optimization logic 334) however, the operator or user may prefer that the mobile machine 100 not exceed a speed of 13,7 km/h (8.5 mph). In other examples, the travel speed may be limited due to the activation of automation modes, for instance, when automatic steering (or guidance) is activated the machine travel speed may be limited to less than an optimal speed determined by speed optimization logic 334. As an example, auto-steer may not be operable or may not be reliable above certain speeds. In other examples, the travel speed may be limited due to operating parameters (or operating parameter range) of systems of mobile machine 100, such as the speed (or speed range) of seed metering system 124/189, the speed (or speed range) of the active seed delivery system 166, the speed (or speed range) of the engine or propulsion subsystem 350, the current gear (or available higher gears) of the transmission or gear box, as well as various other operating parameters (or operating parameter ranges). As an example, speed optimization logic 334 may determine an optimal speed that is higher than a current speed, but machine 100 cannot be increased to the optimal speed due to other operating parameters (or operating parameter ranges) of other systems of machine 100. In other examples, the travel speed may be limited due to dynamics of machine 100. For example, speed of the machine 100 may be limited based on the tilt, roll, or yaw of the machine 100. As an example, the machine 100 may be able to travel faster when the machine is in a level state or heading straight, or both, as compared to when the machine 100 is tilted, rolled, or turning. As another example, speed of the mobile machine 100 may be limited based on operator ride quality. For example, where towing machine 104 or operator's seat 319 is bouncing beyond a threshold value, the speed of machine 100 may not be increased (and may in fact be reduced). As can be seen system limits 362 may impose speed limits that are less than an optimal speed determined by speed optimization logic 334. In such a case, the speed of the machine may be only incrementally increased based further on the limits imposed by system limits 362 or may be maintained at its current speed, or may be reduced. The system limits 362 may be input by an operator 360, a user 364, provided by a manufacturer, or determined by control system 314.

Environmental limits 364 are limits on the travel speed of mobile machine 100 due to characteristics of the environment in which mobile machine 100 is operating. Environmental limits 364 include map data of the worksite at which the machine 100 is operating, and in particular weather data for the worksite at which machine 100 is operating. As an example, the speed of mobile machine 100 may be limited where machine 100 is near or approaching a border of the worksite (e.g., the machine may have to turn soon, the machine may be operating near a fence or other objects near a border of the worksite). The current position of the machine 100 can be provided by geographic position sensors 304 and border information can be provided by a field map. In another example, due to the weather at the worksite, the speed of machine 100 may be limited, for example, speed of machine 100 may be limited due to precipitation or temperature at the worksite. The weather data may be provided by a sensor 308 (e.g., other sensor 328), input by an operator 360 or user 366, or may be obtained from an external weather source over network 359. In another example, the speed of machine 100 may be limited due to conditions of the worksite, such as soil moisture. The conditions of the worksite may be provided by a map (e.g., a soil moisture map), may be input by an operator 360 or user 366, or may be obtained from an external source. The environmental limits 362 may be input by an operator 360, a user 364, provided by a manufacturer, or determined by control system 314. As can be seen environmental limits 364 may impose speed limits that are less than an optimal speed determined by speed optimization logic 334. In such a case, the speed of the machine may be only incrementally increased based further on the limits imposed by environmental limits 364 or may be maintained at its current speed, or may be reduced. External limits 366 are limits on the travel speed of mobile machine 100 due to factors external to the agricultural system 300 or external to the environment in which mobile machine 100 is operating, or both. For example, speed optimization logic 334 may determine an optimal speed that would result in mobile machine 100 finishing at the field in 4 hours. However, a seed tender may be arriving at the field in 5 hours. In such a case, the speed of mobile machine 100 may be limited such that mobile machine 100 does not finish at the field prior to the seed tender arriving. The external limits 364 may be input by an operator 360, a user 364, provided by a manufacturer, determined by control system 314, or provided from other systems (e.g., seed tender system) over network 359. As can be seen external limits 366 may impose speed limits that are less than an optimal speed determined by speed optimization logic 334. In such a case, the speed of the machine may be only incrementally increased based further on the limits imposed by external limits 366 or may be maintained at its current speed, or may be reduced.

Other data 368 can include a variety of other data, such as other types of limits, as well as computer executable instructions that are executable by one or more processors or servers such as processors or servers 301.

Control system 314 includes communication system control signal generator 329, interface control signal generator 330, propulsion subsystem control signal generator 331, speed optimization logic 334, and control system 314 can include other items 339, such as other types of control signal generators to control other controllable subsystems 356. Controllable subsystems 316 propulsion subsystem 350, and subsystems 316 can include a wide variety of other controllable subsystems 356. While shown separately from controllable subsystems 316, it will be understood that various other components of mobile machine 100 are also controllable subsystems, such as one or more operator interface mechanism 318 and communication system 306.

Communication system control signal generator 329 is operable to generate control signals to control communication system 306 to control communication between components of mobile machine 100 and between components of agricultural system 300 as well as between components of agricultural system 300 and external systems.

Interface control signal generator 330 is operable to generate control signals to control interface mechanisms, such as operator interface mechanisms 318 or user interfaces 364, or both. The interface control signal generator 330 is also operable to present sensor data or processed sensor data, or both, as well as various other information such as optimal speeds determined by speed optimization logic 334 and control recommendations generated by speed optimization logic 334 to operator 360 or a remote user 366, or both. As an example, interface controller 330 generates control signals to control a display mechanism to display one or both of predictive map 264 and predictive control zone map 265 for the operator 260 or a remote user 366, or both. Interface controller 330 may generate operator or user actuatable mechanisms that are displayed and can be actuated by the operator or user to interact with the displayed map. The operator or user can edit the map by, for example, correcting a value displayed on the map, based on the operator's or the user's observation.

Propulsion subsystem control signal generator 331 illustratively generates control signals to control propulsion subsystem 350 to control a speed characteristic of mobile machine 100, such as one or more of travel speed, acceleration, and deceleration, for example, based on sensor data or processed sensor data, inputs provided by an operator or user, optimal speeds determined by speed optimization logic 334, or control recommendations provided by speed optimization logic 334. Thus, propulsion subsystem control signal generator 331 is operable to control (e.g., increase or decrease) the speed of mobile machine 100 by control of propulsion subsystem 350. Propulsion subsystem 350 may include various power train components of mobile machine 100, such as, but not limited to, an engine or motor, a transmission (or gear box), as well as various other power train components.

Speed optimization logic 334 illustratively determines optimal travel speeds for mobile machine 100 during operation and can generate speed control commands that are utilized by propulsion subsystem control signal generator 331 to control propulsion subsystem 350 (e.g., to increase, decrease, or maintain travel speed) and can generate speed control recommendations that are presented to an operator 360 (e.g., via an operator interface mechanism 318) or to a user 366 (e.g., via a user interface mechanism 364, or both. Speed optimization logic 334 determines optimal travel speeds based on sensor data generated by sensors 308 (or processed sensor data generated by processing system 338) and data from data store 302 such as one or more of job quality thresholds (or targets) 360, system limits 362, environmental limits 364, external limits 366, and other data 368. The operation of speed optimization logic 334 will be discussed in more detail below.

As previously discussed, control system 314 may include various other items 339 including, but not limited to, various other control signal generators that are operable to control other controllable subsystems of mobile machine 100.

While the illustrated example of FIG. 7 shows that various components of agricultural system architecture 300 are located on mobile machine 100, it will be understood that in other examples one or more of the components illustrated on mobile machine 100 in FIG. 7 can be located at other locations, such as one or more remote computing systems 368. For instance, one or more of data stores 302, processing system 338, control system 314 (or one or more components of control system 314) can be located remotely from mobile machine 100 but can communicate with (or be communicated to) mobile machine 100 via communication system 306 and network 359. Thus, in one example, one or more of the data from data store 302, processed sensor data generated by processing system 338, and the optimal travel speeds generated by speed optimization logic 334 may be generated at remote locations away from mobile machine 100 and communicated to mobile machine 100 over network 359. The information used in the generation of the processed sensor data or the optimal travel speeds, or both, may be provided at those remote locations over network 359, for example sensor data generator by sensors 308 can be provided over network 359 to the remote locations.

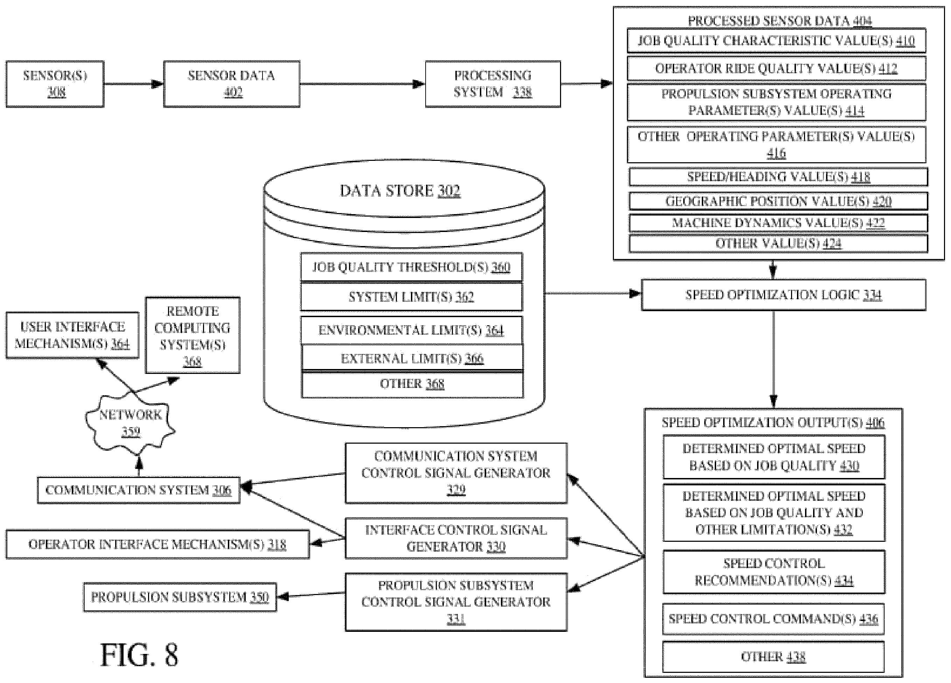

FIG. 8 is a block diagram of a portion of the agricultural system architecture 300 shown in FIG. 7. Particularly, FIG. 8 shows, among other things, examples of the speed optimization logic 334 in more detail. FIG. 8 also illustrates information flow among the various components shown. As illustrated in FIG. 8, speed optimization logic obtains 334 (e.g., receives or retrieves) processed sensor data 404 and data from data store 302 and generates, based on the processed sensor data 404 and data from data store 302, one or more speed optimization outputs 406.

As illustrated, processing system 338 receives sensor data 402 from sensors 308 and processes the sensor data 402 to generate processed sensor data 404. As illustrated, processed sensor data 404 may include job quality characteristic values 410 (e.g., down force margin values, implement ride quality values, percent ground contact values, applied down force values, seed singulation values, seed population values, seed spacing values, etc.), operator ride quality values 412, propulsion subsystem operating parameter values 414 (e.g., engine speed values, gear selection values, engine temperature values, etc.), other operating parameter values (e.g., seed metering system speed values, active seed delivery system speed values, automation mode(s) engagement values, etc.), current travel speed and current heading values 418, current geographic position values 420 indicative of the current position of mobile machine 100 in the worksite, machine dynamics values 422 (current roll, pitch, and yaw values of mobile machine 100), as well as various other values 424.

Based on the data from data store 302 and processed sensor data 404, speed optimization logic 334 generates one or more speed optimization outputs 406, for example, one or more of determined optimal travel speed based on job quality 430, determined optimal travel speed based on job quality and other limitation(s) 432, speed control recommendation(s) 434, speed control command(s) 436, as well as various other outputs 438.

Determined optimal travel speed based on job quality 430 is an optimal travel speed of mobile machine 100 based on the current value(s) of one or more job quality characteristics (as indicated by job quality characteristic values 410) and one or more job quality thresholds (or targets) 360. For example, where the job quality characteristic value(s) 410 satisfy the one or more respective job quality thresholds (or targets) speed optimization logic 334 may generate, as an output 406, an optimal travel speed 430 that is greater than a current speed (as indicated by 418) of mobile machine 100. Where the job quality characteristic value(s) 410 do not satisfy the one or more respective job quality thresholds (or targets) speed optimization logic 334 may generate, as an output, an optimal travel speed 430 that is less than or equal to a current speed (as indicated by 418) of mobile machine 100. For example, where one or more of the down force margin value, implement ride quality value, percent ground contact value, applied down force value, seed singulation value, seed population value, and seed spacing value, indicated in job quality characteristic values 410, satisfy the one or more respective down force margin threshold (or target) value, the implement ride quality threshold (or target) value, the percent ground contact threshold (or target) value, the applied down force threshold (or target) value, the seed singulation threshold (or target) value, the seed population threshold (or target) value, the seed spacing threshold (or target) value, as indicated in job quality thresholds (or targets) 360, then speed optimization logic 334 may determine an optimal speed 430 that is greater than a current speed of mobile machine 100. The optimal speed 430 may be an incremental increase (e.g 0,8 km/h (0.5 mph)) or may be a value retrieved from a lookup table or from a machine learning algorithm. After the speed is increased, speed optimization logic 334 reassesses the job quality of mobile machine 100 and determines a new optimal speed 430. The optimal speed 430 may also be less than or the same as the current speed of mobile machine 100.

Determined optimal travel speed based on job quality and other limitations 432 is an optimal travel speed of mobile machine 100 based on the current value(s) of one or more job quality characteristics (as indicated by 410), one or more job quality thresholds (or targets) (as indicated by 360), one or more of operator ride quality values 412, propulsion subsystem operating parameter values 414, other operating parameter values 416, current speed and current heading values 418, current geographic position values 420, current machine dynamics values 422, and other values 424, and one or more of system limits 362, environmental limits 364, external limits 366, and other data 368. For example, it may be that speed optimization logic 334 determines that machine 100 could (or should) travel at a given speed 430 based on job quality, but due to other limitation(s) (one or more of 362, 364, 366, and 368) and other value(s) (one or more of 412, 414, 416, 418, 420, 422, and 424) speed optimization logic 334 determines that machine 100 could (or should) travel at a given speed 432. The optimal speed 432 may be an incremental increase (e.g., 0,8 km/h (0.5 mph)) or may be a value retrieved from a lookup table or from a machine learning algorithm. After the speed is increased, speed optimization logic 334 reassesses the job quality of mobile machine 100 and other values relative to other limitations and determines a new optimal speed 432. The optimal speed 432 may also be less than or the same as a current speed of mobile machine 100.

In this way, an operator 360 or user 366 can see what the speed 430 of mobile machine 100 could be based on job quality (without other limits). In some cases, the operator 360 or user 366 may choose to elect the speed 430 over the speed 432. For example, where the limitation is an operator or user preferred speed limit (362) set by the operator 360 or user 366, the operator 362 or user 366 may choose to remove or ignore the preferred speed limit to allow machine 100 to travel at the optimal speed 430. This is just one example.

In determining the optimal speeds 430 or 432, it will be understood that speed optimization logic 434 can compare current values (one or more of 410, 412, 414, 416, 418, 420, 422, and 424) to values derived from data in data store 302 (one or more of 360, 362, 364, 366, and 368).

The determined optimal speed(s) 430 or determined optimal speed(s) 432, or both, can be provided to interface control signal generator 330 to generate control signals to present he determined optimal speed(s) 430 or determined optimal speed(s) 432, or both, to an operator 360 (via an operator interface mechanism 318) or to a user 366 (via a user interface mechanism 364) or both. The determined optimal speed(s) 430 or determined optimal speed(s) 432, or both, can be provided to communication system control signal generator 329 to generate control signals to provide the determined optimal speed(s) 430 or determined optimal speed(s) 432, or both, to remote computing systems 368. The determined optimal speed(s) 430 or determined optimal speed(s) 432, or both, can be provided to propulsion control signal generator 331 to generate control signals to control propulsion subsystem 350 based on the determined optimal speed(s) 430 or determined optimal speed(s) 432, or both.

Instead of merely presenting or providing the determined optimal speed(s) 430 or determined optimal speed(s) 432, or both, speed optimization logic 334 can generate, as an output 406, a speed control recommendation 434 that is presented to an operator 360 or user 366 that recommends an action to be taken, such as a recommendation to increase speed, to decrease speed, or to maintain speed based on the determined optimal speed(s) 430 or determined optimal speed(s) 432, or both,. Additionally, or alternatively, speed optimization logic 334 can generate, as an output 460, a speed control command 436 that commands propulsion control signal generator 331 to generate control signals to control propulsion subsystem 350 to increase speed, decrease speed, or maintain speed, based on the determined optimal speed(s) 430 or determined optimal speed(s) 432, or both.

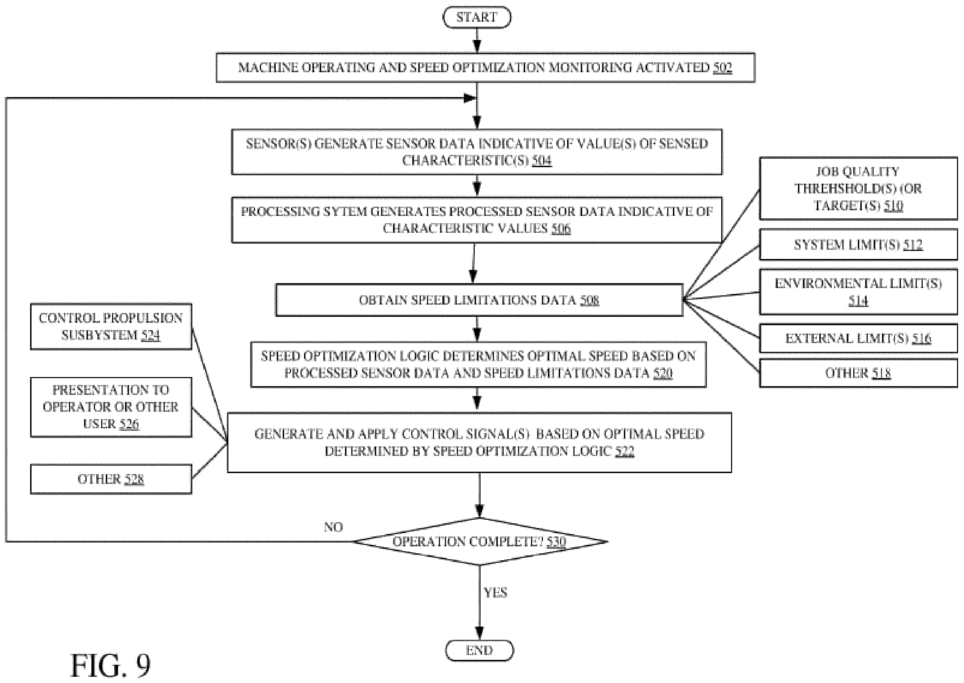

FIG. 9 is a flow diagram illustrating one example of the operation of agricultural system architecture 300 in providing machine speed optimization monitoring and control.

At block 502 it is first determined that the machine is operating and that the speed optimization monitoring of speed optimization logic 334 has been activated. It will be understood that in some examples, the machine 100 may be operated without utilizing speed optimization logic 334. An operator 360 or user 366 may activate speed optimization logic 334, or speed optimization logic 334 may be activated by default and deactivated by an operator 360 or user 366.

At block 504 one or more sensors 308 generate sensor data 402 indicative of one or more characteristic values. At block 506, processing system 338 processes the sensor data 402 to generate processed sensor data 404 indicative of one or more characteristic values, such as one or more of job quality characteristic values 410 (e.g., down force margin values, implement ride quality values, percent ground contact values, applied down force values, seed singulation values, seed population values, seed spacing values, etc.), operator ride quality values 412, propulsion subsystem operating parameter values 414 (e.g., engine speed values, gear selection values, engine temperature values, etc.), other operating parameter values (e.g., seed metering system speed values, active seed delivery system speed values, automation mode(s) engagement values, etc.), current travel speed and current heading values 418, current geographic position values 420 indicative of the current position of mobile machine 100 in the worksite, machine dynamics values 422 (current roll, pitch, and yaw values of mobile machine 100), as well as various other values 424.

At block 508, agricultural system 300 (or control system 314 or speed optimization logic 334) obtains (e.g., receives or retrieves) one or more speed limitations data from data store 302, such as one or more of job quality threshold(s) (or target(s)) 360 as indicated by block 510, system limit(s) 362 as indicated by block 512, environmental limit(s) 364 as indicated by block 514, external limit(s) 366 as indicated by block 516, and other data 368 as indicated by block 518.

At block 510, based on the processed sensor data 404 and the data obtained from data store 302, speed optimization logic 334 determines an optimal speed 430 or an optimal speed 432, or both.

At block 522, control system 314 generates and applies control signals based on an optimal speed 430 or an optimal speed 432, or both, determined by speed optimization logic 434. For example, as indicated by block 524, propulsion subsystem control signal generator 331 may generate control signals to control propulsion subsystem 350 to control a travel speed of mobile machine 100 based on an optimal speed 430 or an optimal speed 432, or both, or based on a speed control command 436 (which is based on optimal speed 430 or optimal speed 432, or both). Alternatively, or additionally, as indicated by block 526, interface control signal generator 330 may generate control signals to control an operator interface mechanism 318 or a user interface mechanism 364, or both, to present an optimal speed 430 or an optimal speed 432, or both, or to present a speed control recommendation 434 (which is based on optimal speed 430 or optimal speed 432, or both). In some examples at block 526, interface control signal generator 330 can control one or more of operator interface mechanisms 318 or user interface mechanisms 364 to present one or more of an optimal speed 430, an optimal speed 432, and a speed control recommendation 434.

These are merely some examples. As indicated by block 528, control system 314 can generate various other control signals to control various other items of mobile machine 100 (or agricultural system 300) based on an optimal speed 430 or an optimal speed 432, or both. For example, but not by limitation, communication system control signal generator 329 can generate control signals to control communication system 306 to communicate one or more outputs 406 to a remote system such as a remote computing system 368 or another remote system (such as another mobile machine 100 or a different type of mobile machine).

At block 636, a determination is made as to whether the operation has been completed. If the operation is not completed, the processing return to block 504. If it is determined, at block 536 that the operation has ended (e.g., mobile machine 100 finished at the worksite or speed optimization logic 334 deactivated), then processing ends.

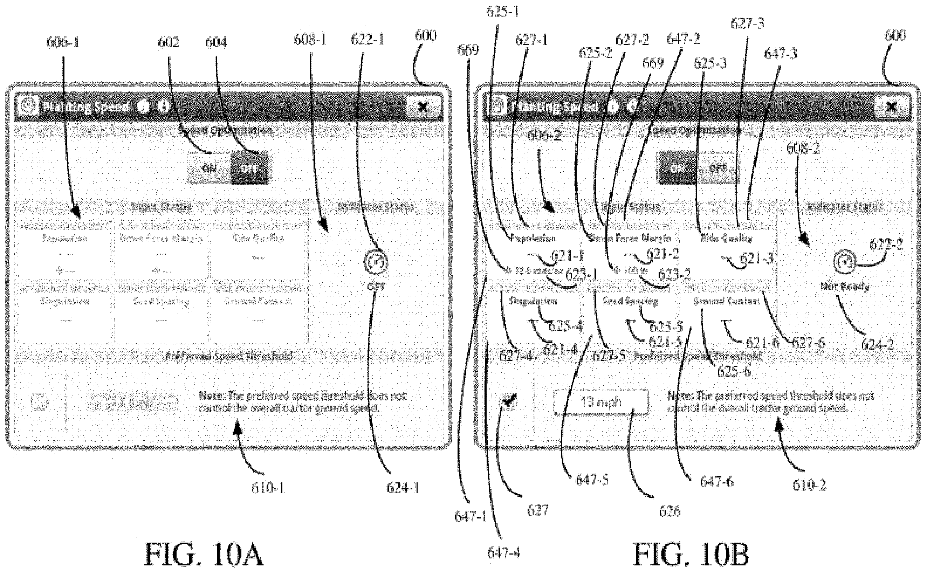

FIGS. 10A-H are pictorial illustrations showing examples of a speed optimization interface display 600 that can be presented to an operator 360 (via an operator interface mechanism 318) or a user 366 (via a user interface mechanism 364) or both based on output(s) 406 from speed optimization logic 434.

As illustrated, display 600 includes a speed optimization logic 334 activation button 602 (illustratively shown as a selectable "ON" button) and a speed optimization logic 334 deactivation button 604 (illustratively shown as a selectable "OFF" button). Buttons 602 and 604 can be interactable by an operator 360 or a user 366, or both. For example, buttons 602 and 604 may be touch sensitive. Selection of button 602 activates speed optimization logic 334 and selection button 604 deactivates speed optimization logic 334. FIG. 10A shows an example in which button 604 has been selected and thus speed optimization logic 334 has been deactivated. FIGS. 10B-H show examples in which button 602 has been selected and thus speed optimization logic 334 has been activated.

As illustrated, display 600 also includes job quality display portion 606, speed optimization display portion 608, and limit display portion 610.

As illustrated in FIG. 10A, in which button 604 is selected (i.e., speed optimization logic 334 is deactivated), as indicated by the shading of button 604, job quality display portion 606 and limit display portion 610 are grayed (or faded) out and may not be interactable, which further indicates that speed optimization logic 334 is deactivated. As illustrated in FIGS. 10A-H, speed optimization display portion 608 of display 600 includes a graphical status or recommendation display indicator 622 that graphically (with surfaced symbols or graphics) indicates a recommendation or status and a textual status or recommendation display indicator 624 that textually (with surfaced text) indicates a status or recommendation. Graphical indications may advantageously be understood/registered by an operator 360 or user 366 more quickly than textual display elements, however textual display elements can be present such that a graphic display element can become familiar to an operator 360 or user 366. In the example of FIG. 10A, speed optimization display portion 608-1 includes graphical recommendation or status indicator 622-1 (illustratively shown as a speedometer symbol, which may also be filled with gray color, or another color, be grayed (or faded), to additionally indicate that logic 334 is deactivated) and textual recommendation or status indicator 624-1 (illustratively shown as text "OFF" to indicate that logic 334 is deactivated).

In FIGS. 10B-H , button 602 has been selected and thus speed optimization logic 334 is activated. As illustrated in FIGS. 10A-H, job quality display portion 606 includes a plurality of textual job quality characteristic indicators 625, a plurality of textual job quality characteristic value indicators 621 (each associated with one of indicators 625), a plurality of textual job quality characteristic threshold (or target) display indicators 623 (each associated with one of indicators 625 or indicators 621), a plurality of graphical job quality characteristic threshold (or target) display indicators 669 (each associated with one of indicators 623), and a plurality of graphical job quality status indicators 627. As further illustrated in FIGS. 10B-H , limit display portion 610 includes an interactable limit activation/deactivation button 629 that is interactable by an operator 360 or user 366 (such as by touch input) activate and deactivate a limit. In the illustrated example, the limit is a system limit in the form of an operator or user preferred speed threshold (or target), the value of which is indicated by interactable limit value indicator 626 which, in FIGS. 10A-10F, shows that the operator or user preferred speed threshold (or target) is 21 km/h (13 mph). Additionally, as logic 334 is activated in FIGS. 10B-H , it can be seen that portions 606 and 610 are no longer grayed (or faded) as they were in FIG. 10A.

FIG. 10A also shows, in speed optimization display portion 608-2, a graphical indicator 622-2 (illustratively shown as a speedometer symbol that can be colored, such as gray, for example a darker, lighter, or same gray as with indicator 622-1) and a textual indicator 624-2 (illustratively shown as text "NOT READY"). Indicators 622-2 and 624-2 indicate that while speed optimization logic 334 is activated it is not yet ready to provide outputs. Such an example can occur when the machine 100 is traveling in a non-crop area, such as a road or headland, or when the machine is not yet performing the job (e.g., implement 102 is raised and not planting), as well as other scenarios.

In FIG. 10B it can be seen that job quality display portion 606-2 includes a plurality of textual job quality characteristic indicators 625-1, 625-2, 625-3, 625-3, 625-4, 625-5, and 625-6 that textually indicate that population, down force margin, implement ride quality, seed singulation, seed spacing, and percent ground contact, respectively, are the job quality characteristics of interest. The number and type of job quality characteristics may be adjusted in other examples, such as by user or operator selection. Display portion 606-2 also includes a plurality of textual job quality characteristic value indicators 621-1, 621-2, 621-3, 621-4, 621-4, 621-5, and 621-6 which are illustratively one or more textual dashes which indicate that no value for the associated job quality characteristic is available. Portion 606-2 also includes a plurality of textual job quality characteristic threshold (or target) value indicators 623-1 and 623-2 that indicate a threshold (or target) value for an associated job quality characteristic. FIGS. 10A-H also show that portion 606 can include a plurality of graphical job quality characteristic threshold (or target) indicators 669 (illustratively shown as a target or crosshairs symbol that can be colored). It will be noted that while the examples shown in FIGS. 10A-H show that only some of the job quality characteristics have associated thresholds (or targets) in other examples more, less, or all of the job quality characteristics may have an associated threshold (or target). FIG. 10B also shows that job quality display portion 606-2 can include a plurality of graphical job quality status indicators 627-1, 627-2, 627-3, 627-4, 627-5, and 627-6. Each indicator 627 can be colored to reflect the status of the current value of the corresponding job quality characteristic relative to the corresponding job quality characteristic threshold (or target) value. For instance, the indicators 627 may be green to indicate that the current value satisfies or exceeds the threshold (or target) value, red to indicate that the current value does not satisfy the threshold (or target) value, or yellow to indicate that the current value does not satisfy the threshold (or target) value but to a lesser extent than when the indicator is red. It will be understood that satisfying a threshold value may include being withing a select (or threshold) range of the value, the range can be above or below. Thus, each color could be associated, such as by operator or user selection, with a range of values or range of difference from a threshold (or target) value. In the example illustrated in FIG. 10B the indicators 627 are grey to graphically indicate that current values are not available or that logic 334 is not ready.

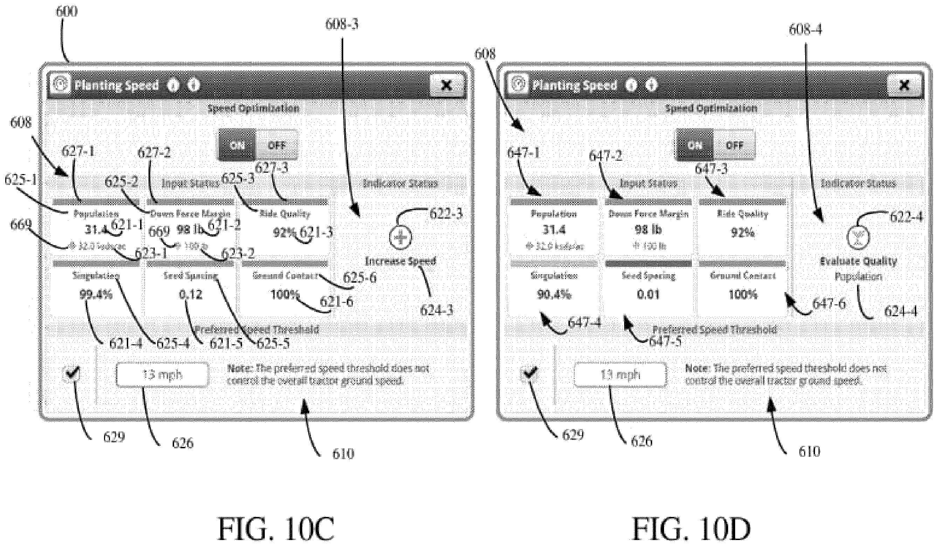

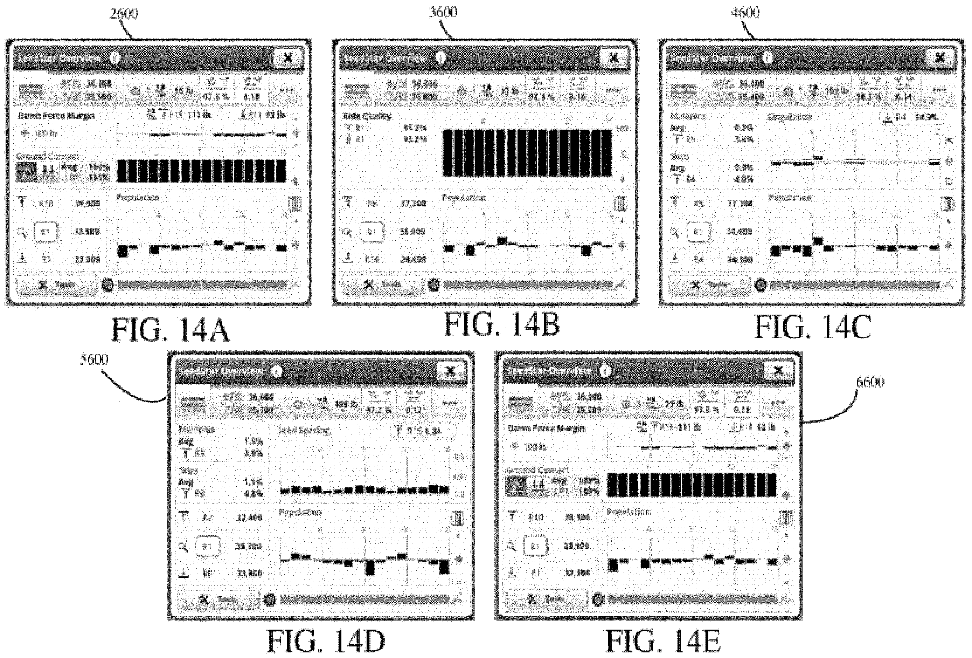

As illustrated in FIG. 10D, display portion 602 includes a plurality of quality characteristic display portions 647 (illustratively shown as population portion 647-1, down force margin portion 647-2, implement ride quality portion 647-3, singulation portion 647-4, seed spacing portion 647-5, and percent ground contact portion 647-6). In other examples, display portion can include more or less portions 647. It will be understood that indicators 621, 623, 625, 627, and 669 are a part of portions 647. In some examples, portions 647 are interactable, as will be discussed in more detail in FIGS. 14A-15.

FIGS. 10C-H illustrate examples where indicators 621 can include textual elements to indicate the current values of each associated job quality characteristic. FIGS. 10C-H also illustrate the interaction of indicators 627, for example, in FIG. 10D, indicator 627-4 (associated with seed singulation) is yellow as the current seed singulation value of 90.4% does not satisfy a seed singulation threshold (or target) value and indicator 627-5 (associated with seed spacing) is red as the current seed spacing value of 0.01 does not satisfy a seed spacing threshold (or target) value.

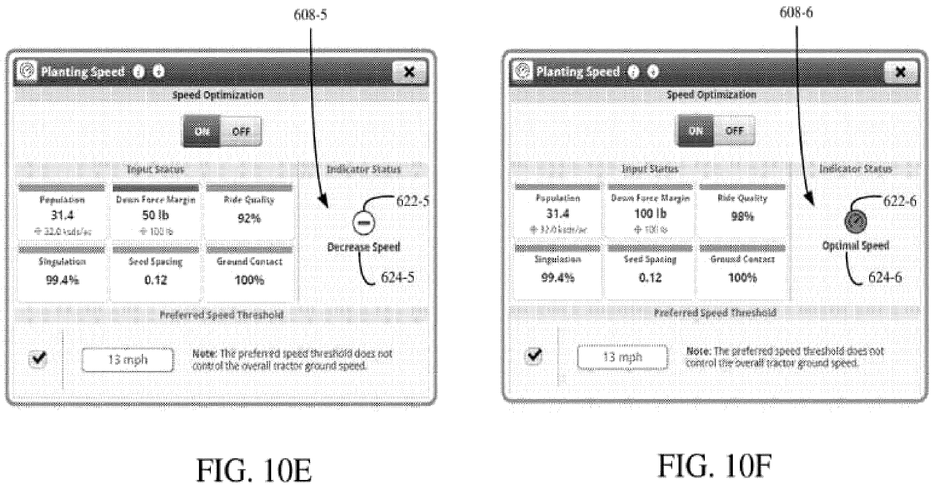

In the examples, shown in FIGS. 10C and 10E-H, the indicators 627 are all green as the values are satisfactory.

FIG. 10C shows an example of display 600 when speed optimization logic 334 has determined that travel speed of machine 100 can (or should) be increased. In the example shown in FIG. 10C, speed optimization display portion 608-3 includes a graphical indicator 622-3, illustratively shown as a colored plus symbol that graphically indicates that speed can (or should) be increased and a textual indicator 624-3 that textually indicates that speed can (or should) be increased. In some examples, one or both of indicators 622-3 and 624-3 may pulse or flash to help grab the attention of the operator or user to indicate that action (increasing speed) can (or should) be taken. In some examples, indicator 622-3 may be green (to indicate that there is action to take), but could be other colors as well. In some examples, indicator 622-3 or 624-3, or both, or display portion 608-3 may be interactable by an operator 360 or user 366, such as by touch input, which may automatically cause propulsion subsystem control signal generator 331 to generate a control signal to control propulsion subsystem 350 to propel machine 100 at the increased speed recommended by speed optimization logic 334.

FIG. 10D shows an example of display 600 when one or more job quality characteristic values do not satisfy their associated threshold (or target) values. As shown in FIG. 10D, speed optimization display portion 608-4 includes a graphical indicator 622-4, illustratively shown as a colored emerged plant symbol that graphically indicates that the operator or user should evaluate why one or more job quality characteristics are unsatisfactory and a textual indicator 624-4 that textual indicates that quality should be evaluated and further indicates one or more job quality characteristics that should be evaluated particularly (illustratively population). In some examples, indicator 622-4 may be yellow (to indicate that there is action to take), but could be other colors as well.

FIG. 10E shows an example of display 600 when speed optimization logic 334 has determined that travel speed of machine 100 can (or should) be decreased. In the example shown in FIG. 10E, speed optimization display portion 608-5 includes a graphical indicator 622-5, illustratively shown as a colored minus symbol that graphically indicates that speed can (or should) be decreased and a textual indicator 624-5 that textually indicates that speed can (or should) be decreased. In some examples, one or both of indicators 622-5 and 624-5 may pulse or flash to help grab the attention of the operator or user to indicate that action (decreasing speed) can (or should) be taken. In some examples, indicator 622-5 may be red (to indicate that there is action to take) but could be other colors as well. In some examples, indicator 622-5 or 624-5, or both, or display portion 608-5 may be interactable by an operator 360 or user 366, such as by touch input, which may automatically cause propulsion subsystem control signal generator 331 to generate a control signal to control propulsion subsystem 350 to reduce the speed of machine 100 to the decreased speed recommended by speed optimization logic 334.

FIG. 10F shows an example of display 600 when speed optimization logic 334 has determined that the current speed of machine 100 is at the determined optimal speed. As shown in FIG. 10F, speed optimization display portion 608-6 includes a graphical indicator 622-6, illustratively shown as a colored speedometer symbol that graphically indicates that the current speed of machine 100 is optimal and a textual indicator 624-6 that textually indicates that the current speed of machine 100 is optimal. Indicator 622-6 may be green (to indicate that there is no action to take) but could be other colors as well.

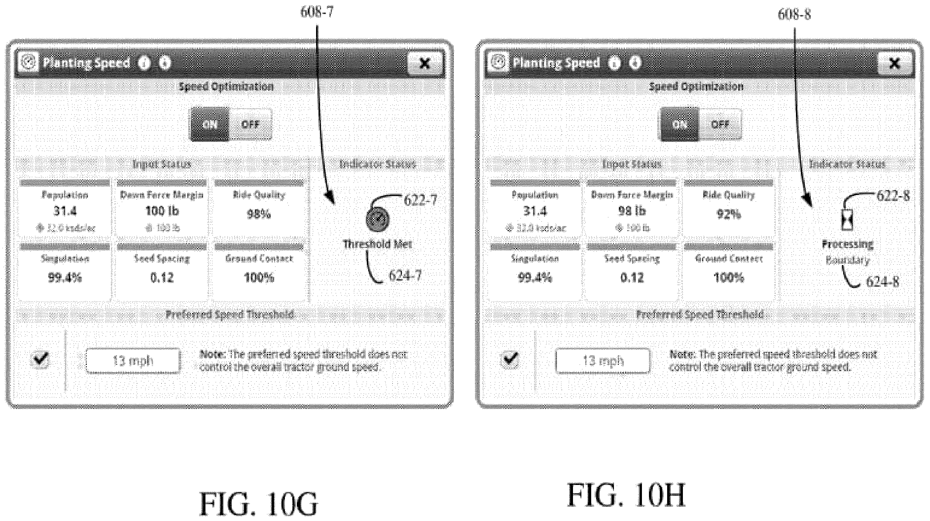

FIG. 10G shows an example of display 600 when speed optimization logic 334 has determined that current speed of machine 100 is at or has otherwise met (e.g., is within a threshold range of) the operator or user preferred speed threshold. As shown in FIG. 10G, speed optimization display portion 608-7 includes a graphic indicator 622-7, illustratively shown as a colored speedometer symbol that graphically indicates that the current speed of machine 100 is at or meets the operator or user preferred speed threshold and a textual indicator 624-7 that textually indicates that the current speed of machine 100 is at or meets the operator or user preferred speed threshold. Indicator 622-7 may be green (to indicate that there is no action to take) but could be other colors.

FIG. 10H shows an example of display 600 when speed optimization logic 334 is currently processing various data to generate an output or that logic 334 is otherwise waiting to generate an output due to one or more factors. As shown in FIG. 10H, speed optimization display portion 608-8 includes a graphic indicator 622-8, illustratively shown as an hourglass symbol that graphically indicates that speed optimization logic 334 is processing or waiting and a textual indicator 624-8 that textually indicates that speed optimization logic 334 is processing or waiting. Indicator 622-8 may be colored, such as gray or another color, to further indicate that no action is being recommended.

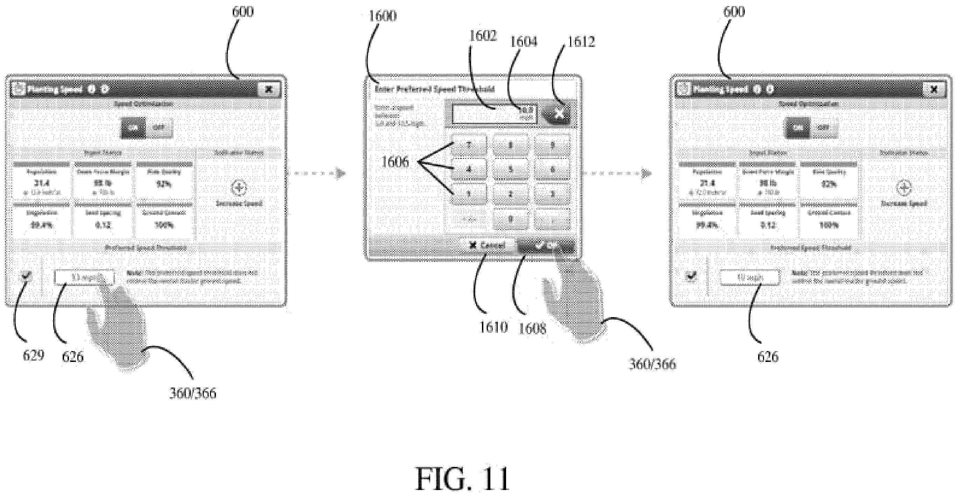

FIG. 11 is a partial pictorial partial diagrammatic illustration that shows example displays 600 and 1600 and operator or user interaction therewith to establish limit threshold (or target) values, such as a new operator or user preferred speed threshold. As shown in FIG. 11, an operator 360 or user 366 may interact (such as by touch input) with interactable limit value indicator 626 and that such interaction may cause interface control signal generator 330 to generate a control signal to present a limit adjustment display 1600. Limit adjustment display 1600 illustratively includes limit value indicator display portion 1602, limit value indicator 1604, a plurality of interactable value indicators 1606, an interactable delete button 1612, an interactable cancel button 1610, and an interactable enter (or accept) button 1608. As shown, operator 360 or user 366 has interacted with indicators 1606 to input a value 1604 of 16 km/h (10 mph) into portion 1602. The operator 360 or user 366 is currently interacting (pressing) the enter (or accept) button 1608 to establish the value 1604 as the new limit threshold (or target) value (i.e., as the new operator or user preferred speed threshold). Alternatively, the operator 360 or user 366 may press the cancel button 1610 which may cause a return back to display 1600. Interaction with delete button 1612 may erase one or more of the digits in value 1604 such that a new value can be entered. Once the operator 360 or user 366 interacts with the enter (or accept) button 1608 the new value 1604 will be reflected in indicator 626.

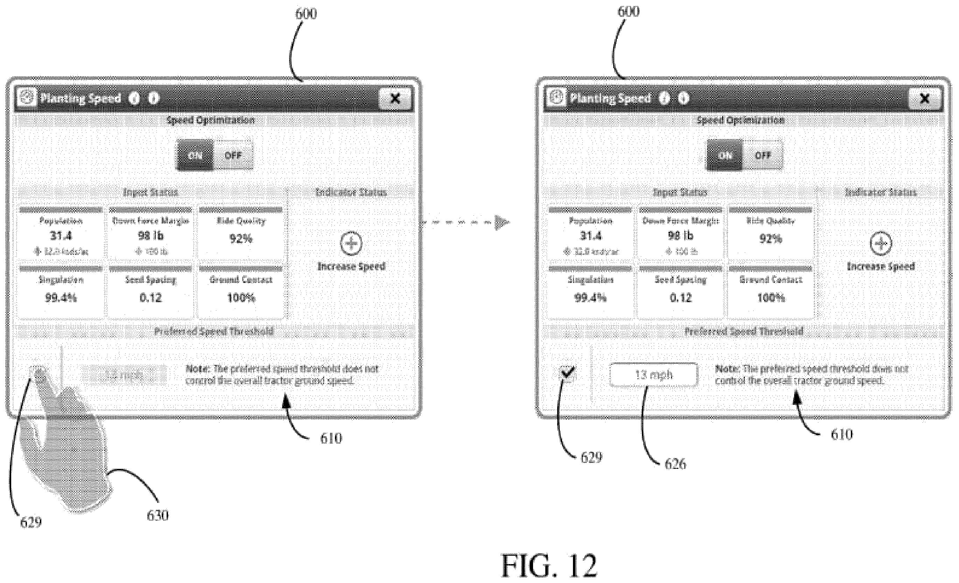

FIG. 12 is a partial pictorial partial diagrammatic illustration that shows examples of display 600 and operator or user interaction therewith to activate or deactivate a limit threshold (or target0, such as to activate an operator or user preferred speed threshold. As shown in FIG. 12, an operator 360 or user 366 can interact (e.g., press) indicator 629 to activate the limit threshold shown in indicator 626. As illustrated in the example display 600 on the left in FIG. 12, display portion 610 is grayed (or faded) out when the limit was deactivated and is colored differently or brightened in the example display 600 on the right when the limit is activated.

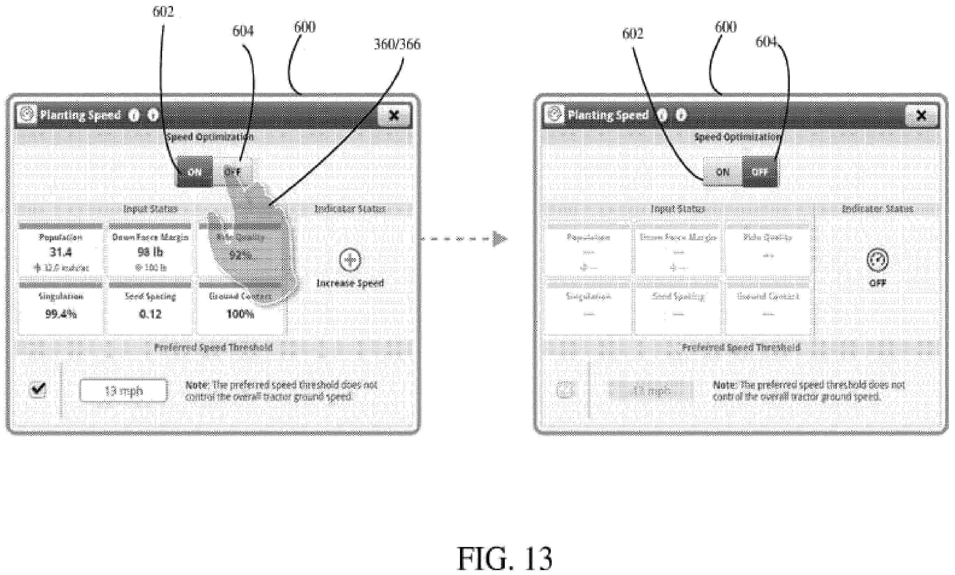

FIG. 13 is a partial pictorial partial diagrammatic illustration that shows example of display 600 and operator or user interaction therewith to activate or deactivate speed optimization logic 334. As shown in FIG. 13, operator 360 or user 366 can interact (e.g., press) one of buttons 602 and 604. In the illustrated example, the example display 600 on the left shows display 600 when speed optimization logic 334 is activated and the example display 600 on the right shows display 600 when speed optimization logic 334 is deactivated, due to operator or user interaction with button 604. In display 600 on the right, portions 606 and 610 are grayed (or faded) out whereas in the display 600 on the left, portions 606 and 610 are colored differently or are brighter.

FIGS. 14A-E are pictorial illustrations that show example displays 2600, 3600, 4600, 5600, and 6600 that can be controllably surfaced by interface control signal generator 330, such as in response to operator or user input (e.g., operator or user input with quality characteristic display portions 647). Displays 2600, 3600, 4600, 5600, and 6600 are quality characteristic displays.

FIG. 14A illustrates a down force margin display 2600 that can be surfaced in response to operator or user interaction with the down force margin portion 647-2 of portion 606 of display 600. The down force margin display 2600 shows more detailed information with regard to down force margin (as well as other quality characteristics) as compared to display 600.

FIG. 14B illustrates an implement ride quality display 3600 that can be surfaced in response to operator or user interaction with the implement ride quality portion 647-3 of portion 606 of display 600. The implement ride quality display 3600 shows more detailed information with regard to implement ride quality (as well as other quality characteristics) as compared to display 600.

FIG. 14C illustrates a seed singulation display 4600 that can be surfaced in response to operator or user interaction with the seed singulation portion 647-4 of portion 606 of display 600. The seed singulation display 4600 shows more detailed information with regard to seed singulation (as well as other quality characteristics) as compared to display 600.

FIG. 14D illustrates a seed spacing display 5600 that can be surfaced in response to operator or user interaction with the seed spacing portion 647-5 of portion 606 of display 600. The seed spacing display 5600 shows more detailed information with regard to seed spacing (as well as other quality characteristics) as compared to display 600.

FIG. 14E illustrates a percent ground contact display 6600 that can be surfaced in response to operator or user interaction with the percent ground contact portion 647-6 of portion 606 of display 600. The percent ground contact display 6600 shows more detailed information with regard to seed singulation (as well as other quality characteristics) as compared to display 600.

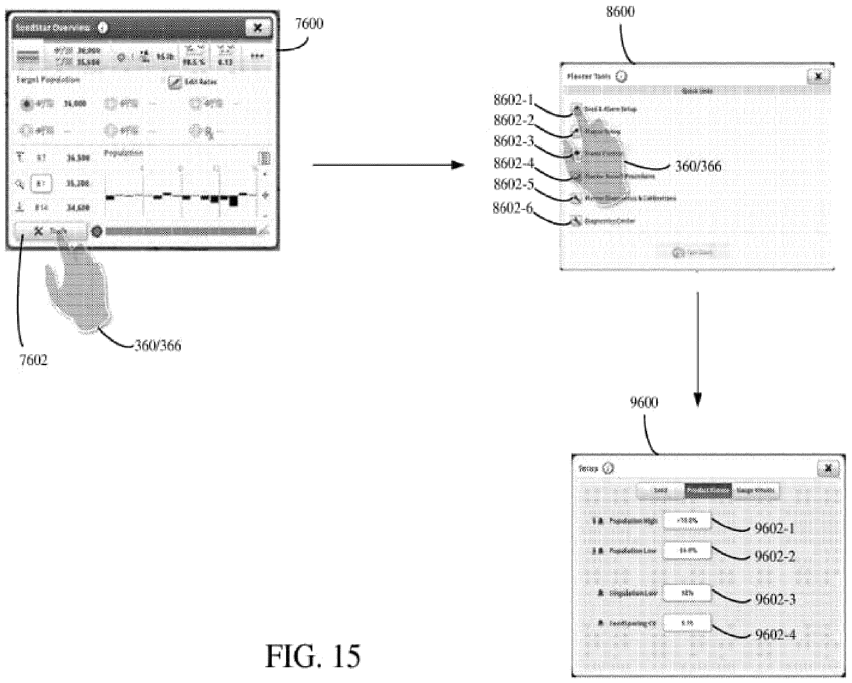

FIG. 15 is a partial pictorial partial diagrammatic view that shows an example of a seed population display 7600, a tools display 8600, and a quality characteristic threshold (or target) display 9600 and operator or user interaction therewith. Specifically, illustrates a seed population display 7600 that can be surface in response to operator or user interaction with the seed population portion 647-1 of portion 606 of display 600. The seed population display 7600 shows more detailed information with regard to seed population (as well as other quality characteristics) as compared to display 600.

Notice in FIGS. 14A-E and 15 that the characteristic of interest (as defined by the portion 647 interacted with in display 600) will be presented to be more prominent (e.g., nearer the top of the resulting display, taking up more of the display, etc.). For example, display 2600 shows down force margin information nearer the top of display 2600 (and above seed population information), display 3600 shows implement ride quality information nearer the top of display 3600 (and above seed population information), display 4600 shows seed singulation information nearer the top of display 4600 (and above seed population information), display 5600 shows seed spacing information nearer the top of display 5600 (and above seed population information, display 6600 shows percent ground contact information nearer the top of display 6600 (and above seed population information), and display 7600 shows seed population information takin up most of display 7600 . Thus, the resulting display will present information in a certain way relative to other information based on operator or user interaction.

As illustrated in FIG. 15, displays 2600, 3600, 4600, 5600, 6600, and 7600 can include an interactable tools button 7602 which is interactable by an operator 360 or user 366. In FIG. 15, operator 360 or user 366 interacts (e.g., presses) tools button 7602 in response to which interface control signal generator 330 generates a control signal to surface tools display 8600. Tools display 8600 includes a plurality of interactable tool selection buttons 8602, illustratively an alarm setup tool selection button 8602-1, a planter setup tool selection button 8602-2, a frame control tool selection button 8602-3, a planter runoff procedures tool selection button 8602-4, a planter diagnostics and calibrations tool selection button 8602-5, and a diagnostics center tool selection button 8602-6. In other examples, more or less and other types of tool selection buttons 8602 may be used.

As illustrated, an operator 360 or user 366 has interacted with (e.g., pressed) alarm setup tool selection button 8602-1, in response to which interface control signal generator 330 generates a control signal to surface an alarm setup display 9600. Alarm setup display 9600 includes a plurality of interactable alarm value display indicators 9602, illustratively a seed population high alarm value display indicator 9602-1, a seed population low alarm value display indicator 9602-2, a seed singulation low alarm value display indicator 9602-3, and a seed spacing alarm value display indicator 9602-4. An operator 360 or user 366 can adjust the alarm values through interaction with indicators 9602. In the illustrated example, the seed population alarm value indicators 9602-1 and 9602-2 establish that when seed population is at or exceeds 10% above the seed population threshold (or target) or is at or exceeds 10% below the seed population threshold (or target) interface control signal generator 330 will generate a control signal to generate an alarm. Seed singulation alarm value indicator 9602-3 establishes that when seed singulation is at or falls below 92% interface control signal generator 330 will generate a control signal to generate an alarm. Seed spacing alarm value indicator 9602-4 establishes that when seed spacing exceeds 0.35 interface control signal generator 330 will generate a control signal to generate an alarm. In other examples, display 9600 can include more or less indicators 9602 as well as indicators 9602 for other characteristics, including other job quality characteristics.

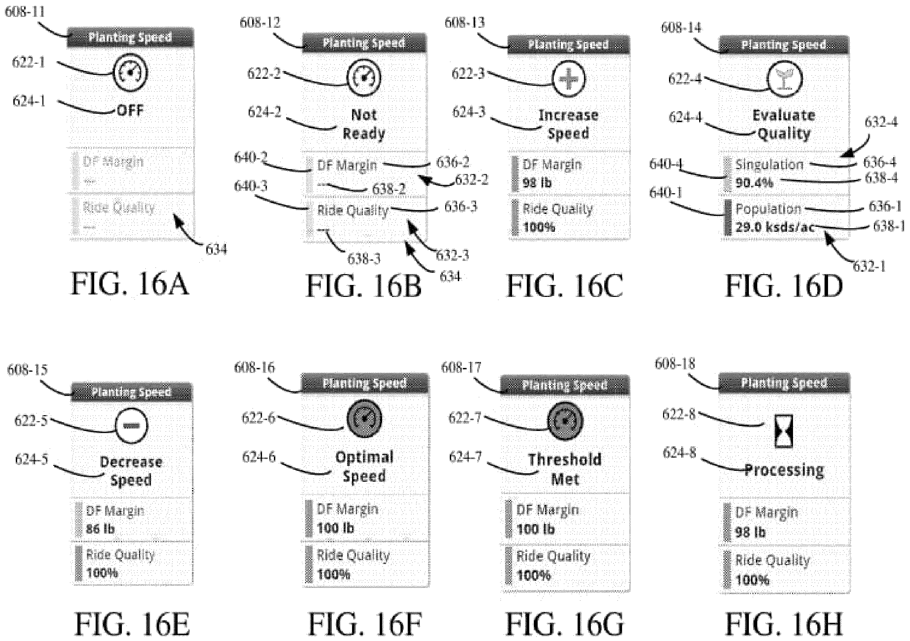

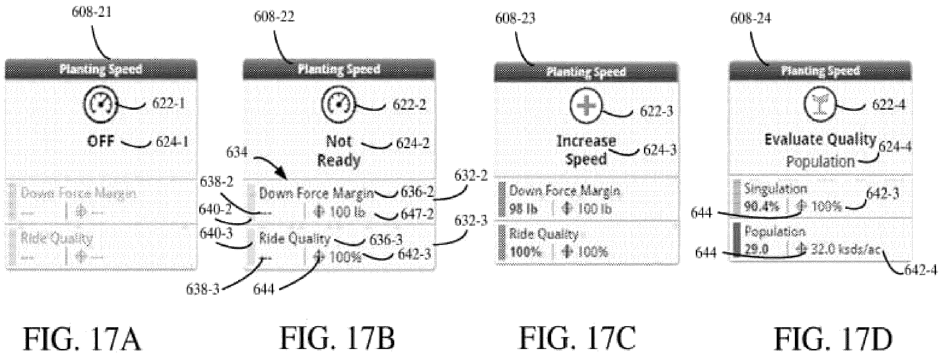

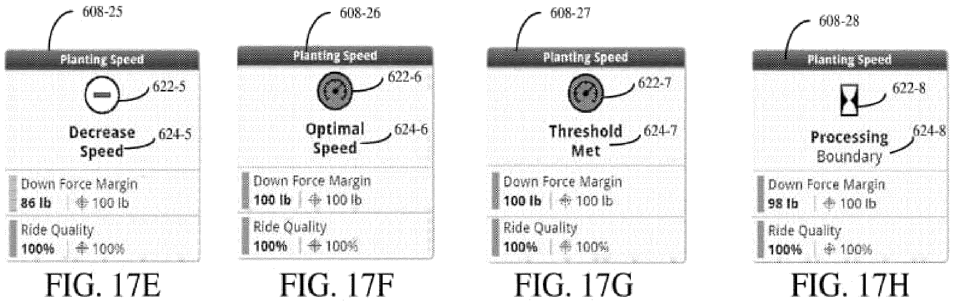

FIGS. 16A-H are pictorial illustrations showing example speed optimization display portions 608 (608-11 to 608-18) that are alternatives to the speed optimization display portions 608 (608-1 to 608-8) shown in FIGS. 10A-H or the speed optimization display portions 608 (608-21 to 608-28) shown below in FIGS. 17A-H. The display portions 608 in FIGS. 16A-H are similar to the display portions 608 in FIGS. 10A-H and thus similar items are number similarly. However, display portions 608-11 to 608-18 also include a quality characteristic display portion 634 that includes one or more respective quality characteristic display portions 632, each portion 632 including a respective textual quality characteristic indicator 636 that textually indicates a quality characteristic of interest, a graphical job quality status indicator 640 that graphically indicates the relationship of the a current quality characteristic value to its associated threshold (or target), and a textual quality characteristic value indicator 638. It will be noted that portions 634 can operate similarly as portions 647 in FIGS. 10A-H, indicators 636 can operate similarly as indicators 625 in FIGS. 10A-H,, that indicators 640 can operate similarly as indicators 627 in FIGS. 10A-H,, and that indicators 638 can operate similarly as indicators 621 in FIGS. 10A-H,. While certain types and numbers of quality characteristics are shown as being displayed, it will be understood that in other examples more or less quality characteristic can be shown and different types of quality characteristics can be shown. For instance, FIG. 16B shows that down force margin (as indicated by 636-1) and implement ride quality (as indicated by 636-2) are shown whereas FIG. 16D shows an example in which singulation (as indicated by 636-3) and population (as indicated by 636-4) are shown. The number and types of quality characteristics that are shown may be set by an operator or a user or may be automatically generated based on need. For instance, in the illustrated example, down force margin and implement ride quality may be the selected quality characteristics to be displayed, but when speed optimization logic 334 identifies quality characteristics that do not satisfy respective thresholds (or targets) those quality characteristics may instead be displayed, at least until their values are in compliance with the thresholds (or targets). Additionally, it will be noted that operator or user interaction with one of quality characteristic display portions 632 will cause interface control signal generator 330 to generate a control signal to surface a corresponding one of displays 2600, 3600, 4600, 5600, 6600, or 7600. In the illustrated example, interaction with down force margin portion 632-2 will cause generation of down force margin display 2600, interaction with implement ride quality 632-3 portion will cause generation of implement ride quality display 3600, interaction with seed singulation portion 632-4 will cause generation of seed singulation display 4600, and interaction with seed population portion 632-1 will cause generation of seed population display 7600.

FIGS. 17A-H are pictorial illustrations showing example speed optimization display portions 608 (608-21 to 608-28) that are alternatives to the speed optimization display portions 608 (608-1 to 608-8) shown in FIGS. 10A-H, or the speed optimization display portions 608 (608-11 to 608-18) shown above in FIGS. 16A-H. Display portions 608-21 to 608-28 are similar to display portions 608-11 to 608-18 and thus similar items are numbered similarly. As shown in FIGS. 17A-H, it can be seen that quality characteristic display portions 634 further include job quality characteristic threshold (or target) indicators 644 which can be similar to indicators 669 and textual job quality characteristic threshold (or target) value indicators 642 which can be similar to indicators 623.

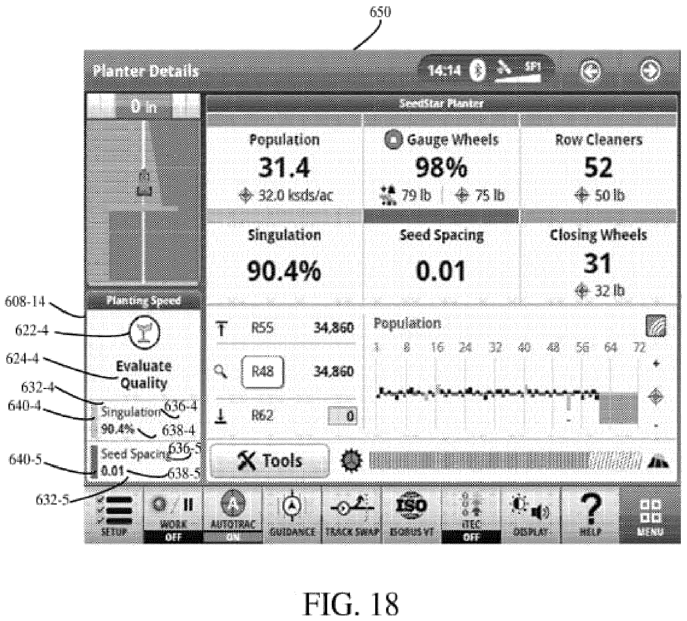

FIG. 18 is a pictorial illustration showing one example of a main operation display 650 that is generally displayed during operation of machine 100. As shown in FIG. 18, one of speed optimization display portions 608 can be displayed on main operation display 650. While the example shown in FIG. 18 illustrates speed optimization display portion 608-14, in other examples, any of the other example display portions 608 can be used alternatively.

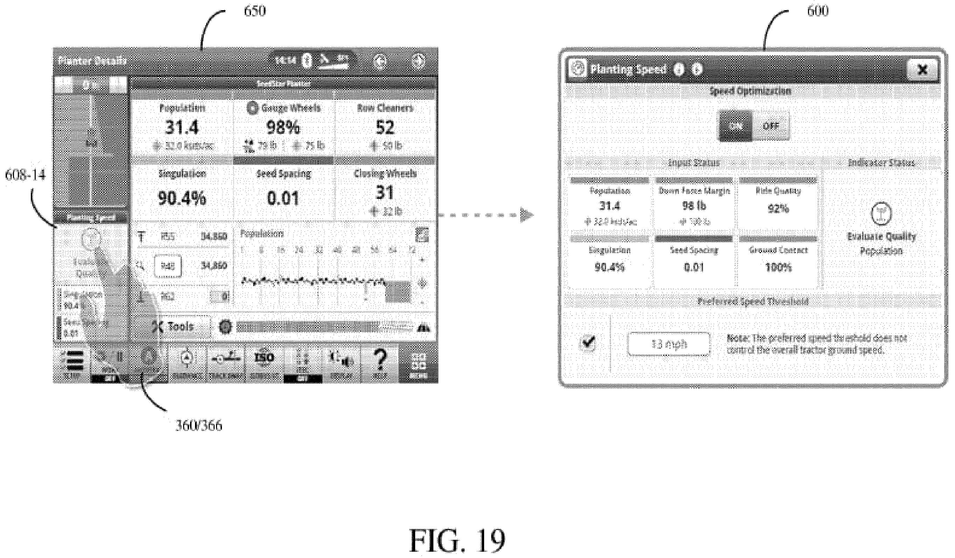

FIG. 19 is partial pictorial partial diagrammatic illustration that shows that display portion 608 of main operation display 650 can be interactable and that in response to such interaction (e.g., operator or user touch) interface control signal generator 330 will generate a control signal to surface speed optimization display 600.

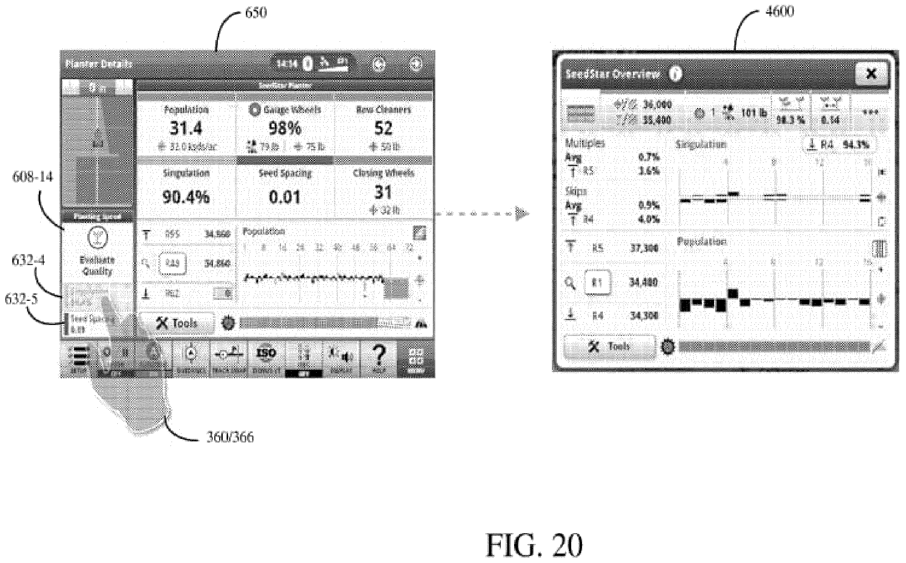

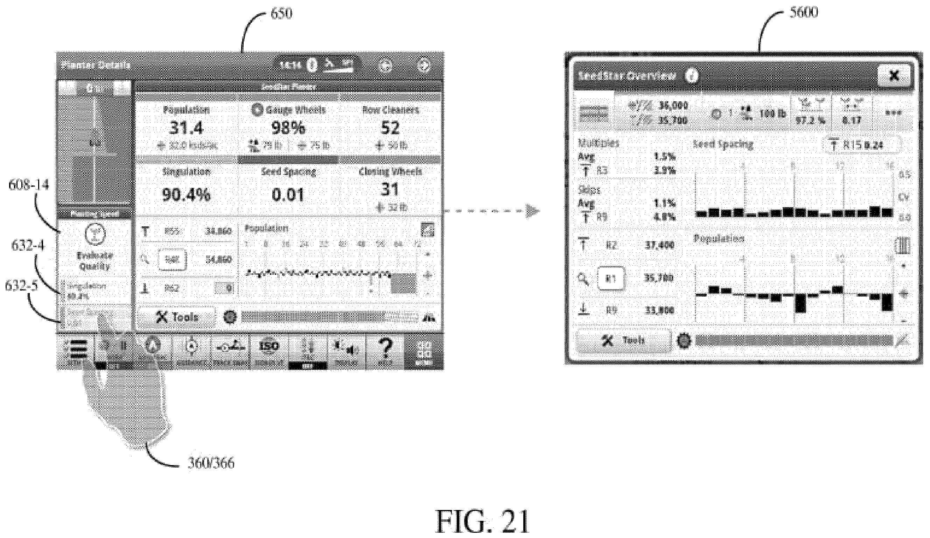

FIGS. 20-21 are partial pictorial partial diagrammatic illustrations that show that quality characteristic display portions 632 can be interactable and that in response to such interaction (e.g., operator or user touch) interface control signal generator 330 will generate a control signal to surface a corresponding quality characteristic display 2600, 3600, 4600, 5600, 6600, or 7600. For example, FIG. 20 shows that in response to interaction with seed singulation display portion 632-4 interface control signal generator 330 will generate a control signal to surface seed singulation display 4600. FIG. 21 shows that in response to interaction with seed spacing display portion 632-5 interface control signal generator 330 will generate a control signal to surface seed spacing display 5600.

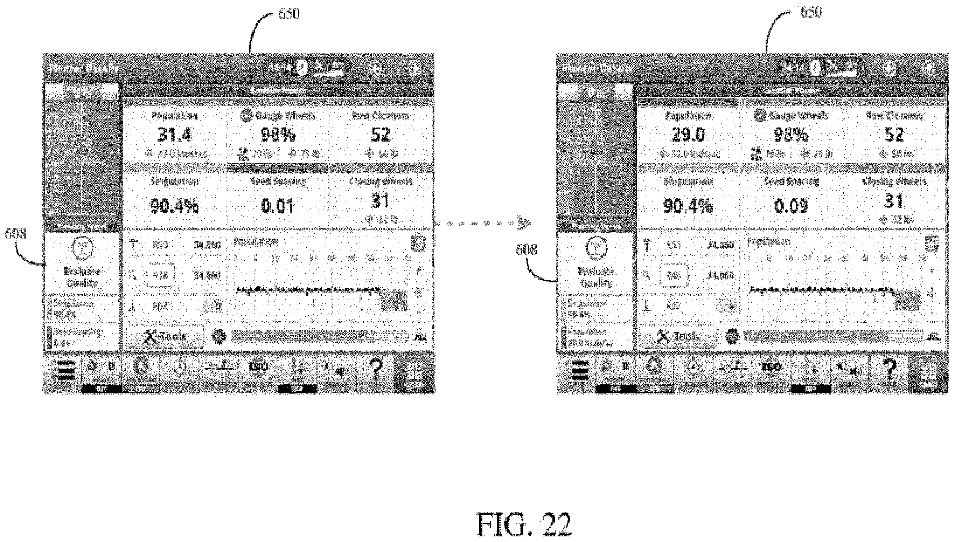

FIG. 22 is a partial pictorial partial diagrammatic illustration that shows that main operation display 650 is dynamic in that it dynamically updates during operation. As shown in FIG. 22, the display 650 on the left is a display 650 at a first time and the display 650 on the right is a display 650 at a second time (after the first time). As can be seen, display 650 has dynamically updated values for one or more characteristics (as shown for population and seed spacing). Additionally, as shown, speed optimization display portion 608 has also updated and includes, at the second time, population portion 632-1 instead of seed spacing portion 632-5 (as in the display 650 on the left) due to the population value no longer satisfying the threshold (or at least due to the population value not satisfying the threshold to a greater extent).

The present discussion has mentioned processors and servers. In some examples, the processors and servers include computer processors with associated memory and timing circuitry, not separately shown. They are functional parts of the systems or devices to which they belong and are activated by and facilitate the functionality of the other components or items in those systems. Also, a number of user interface displays have been discussed. The displays can take a wide variety of different forms and can have a wide variety of different user actuatable operator interface mechanisms disposed thereon. For instance, user actuatable operator interface mechanisms may include text boxes, check boxes, icons, links, drop-down menus, search boxes, etc. The user actuatable operator interface mechanisms can also be actuated in a wide variety of different ways. For instance, they can be actuated using operator interface mechanisms such as a point and click device, such as a track ball or mouse, hardware buttons, switches, a joystick or keyboard, thumb switches or thumb pads, etc., a virtual keyboard or other virtual actuators. In addition, where the screen on which the user actuatable operator interface mechanisms are displayed is a touch sensitive screen, the user actuatable operator interface mechanisms can be actuated using touch gestures. Also, user actuatable operator interface mechanisms can be actuated using speech commands using speech recognition functionality. Speech recognition may be implemented using a speech detection device, such as a microphone, and software that functions to recognize detected speech and execute commands based on the received speech.

A number of data stores have also been discussed. It will be noted the data stores can each be broken into multiple data stores. In some examples, one or more of the data stores may be local to the systems accessing the data stores, one or more of the data stores may all be located remote form a system utilizing the data store, or one or more data stores may be local while others are remote. All of these configurations are contemplated by the present disclosure.

Also, the figures show a number of blocks with functionality ascribed to each block. It will be noted that fewer blocks can be used to illustrate that the functionality ascribed to multiple different blocks is performed by fewer components. Also, more blocks can be used illustrating that the functionality may be distributed among more components. In different examples, some functionality may be added, and some may be removed.

It will be noted that the above discussion has described a variety of different systems, components, logic, generators, and interactions. It will be appreciated that any or all of such systems, components, logic, generators, and interactions may be implemented by hardware items, such as one or more processors, one or more processors executing computer executable instructions stored in memory, memory, or other processing components, some of which are described below, that perform the functions associated with those systems, components, logic, generators, or interactions. In addition, any or all of the systems, components, logic, generators, and interactions may be implemented by software that is loaded into a memory and is subsequently executed by one or more processors or one or more servers or other computing component(s), as described below. Any or all of the systems, components, logic, generators, and interactions may also be implemented by different combinations of hardware, software, firmware, etc., some examples of which are described below. These are some examples of different structures that may be used to implement any or all of the systems, components, logic, generators, and interactions described above. Other structures may be used as well.

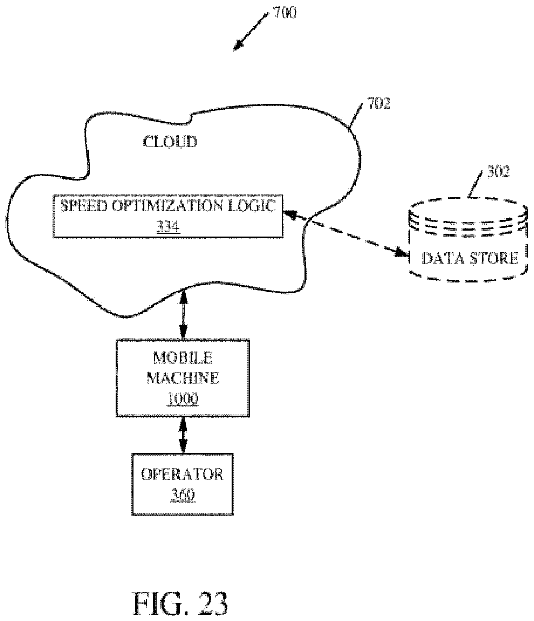

FIG. 23 is a block diagram of mobile machine 1000, which may be similar to mobile machine 100 shown in FIG. 7. The mobile machine 1000 communicates with elements in a remote server architecture 700. In some examples, remote server architecture 700 provides computation, software, data access, and storage services that do not require end-user knowledge of the physical location or configuration of the system that delivers the services. In various examples, remote servers may deliver the services over a wide area network, such as the internet, using appropriate protocols. For instance, remote servers may deliver applications over a wide area network and may be accessible through a web browser or any other computing component. Software or components shown in FIG. 7 as well as data associated therewith, may be stored on servers at a remote location. The computing resources in a remote server environment may be consolidated at a remote data center location, or the computing resources may be dispersed to a plurality of remote data centers. Remote server infrastructures may deliver services through shared data centers, even though the services appear as a single point of access for the user. Thus, the components and functions described herein may be provided from a remote server at a remote location using a remote server architecture. Alternatively, the components and functions may be provided from a server, or the components and functions can be installed on client devices directly, or in other ways.

In the example shown in FIG. 23, some items are similar to those shown in FIG. 7 and those items are similarly numbered. FIG. 23 specifically shows that speed optimization logic 334 may be located at a server location 702 that is remote from the mobile machine 1000. Therefore, in the example shown in FIG. 23, mobile machine 1000 accesses systems through remote server location 702. In other examples, various other items may also be located at server location 702, such as data store 302, processing system 338, and control system 314 (or components thereof).

FIG. 23 also depicts another example of a remote server architecture. FIG. 23 shows that some elements of FIG. 7 may be disposed at a remote server location 702 while others may be located elsewhere. By way of example, data store 302 may be disposed at a location separate from location 702 and accessed via the remote server at location 702. Regardless of where the elements are located, the elements can be accessed directly by mobile machine 1000 through a network such as a wide area network or a local area network; the elements can be hosted at a remote site by a service; or the elements can be provided as a service or accessed by a connection service that resides in a remote location. Also, data may be stored in any location, and the stored data may be accessed by, or forwarded to, operators, users or systems. For instance, physical carriers may be used instead of, or in addition to, electromagnetic wave carriers. In some examples, where wireless telecommunication service coverage is poor or nonexistent, another machine, such as a fuel truck or other mobile machine or vehicle, may have an automated, semi-automated or manual information collection system. As the mobile machine 1000 comes close to the machine containing the information collection system, such as a fuel truck prior to fueling, the information collection system collects the information from the mobile machine 1000 using any type of ad-hoc wireless connection. The collected information may then be forwarded to another network when the machine containing the received information reaches a location where wireless telecommunication service coverage or other wireless coverage- is available. For instance, a fuel truck may enter an area having wireless communication coverage when traveling to a location to fuel other machines or when at a main fuel storage location. All of these architectures are contemplated herein. Further, the information may be stored on the mobile machine 1000 until the mobile machine 1000 enters an area having wireless communication coverage. The mobile machine 1000, itself, may send the information to another network.

It will also be noted that the elements of FIG. 7, or portions thereof, may be disposed on a wide variety of different devices. One or more of those devices may include an on-board computer, an electronic control unit, a display unit, a server, a desktop computer, a laptop computer, a tablet computer, or other mobile device, such as a palm top computer, a cell phone, a smart phone, a multimedia player, a personal digital assistant, etc.

In some examples, remote server architecture 700 may include cybersecurity measures. Without limitation, these measures may include encryption of data on storage devices, encryption of data sent between network nodes, authentication of people or processes accessing data, as well as the use of ledgers for recording metadata, data, data transfers, data accesses, and data transformations. In some examples, the ledgers may be distributed and immutable (e.g., implemented as blockchain).

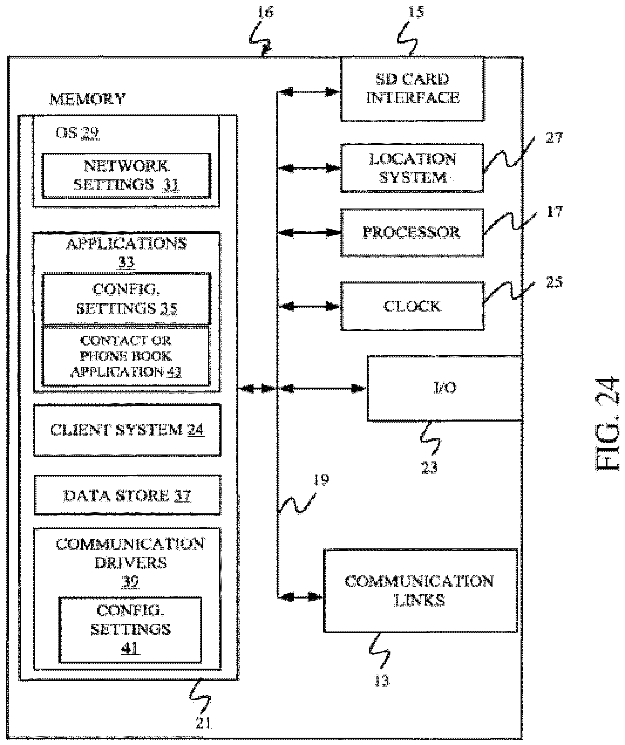

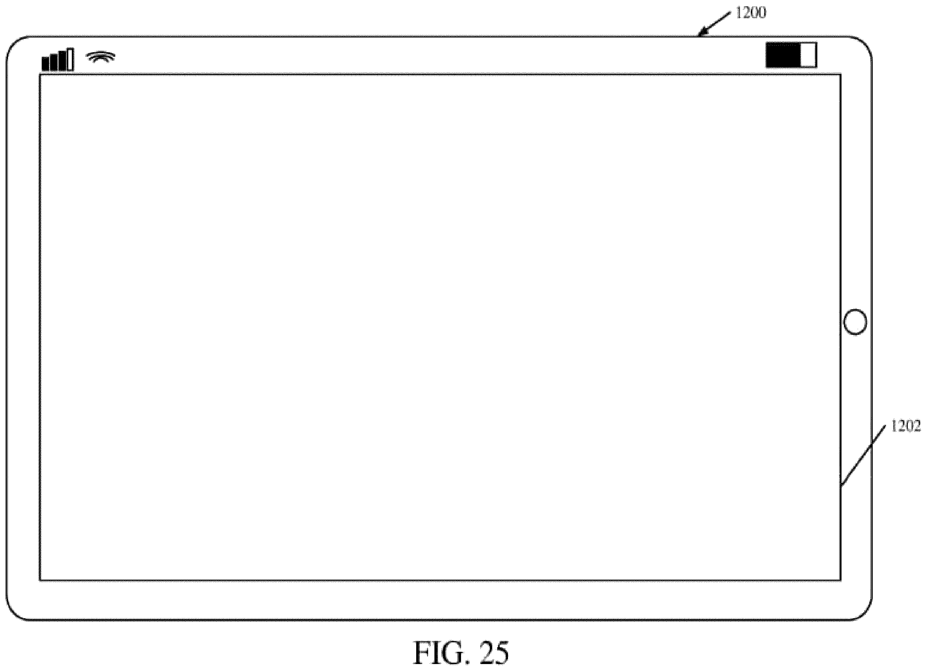

FIG. 24 is a simplified block diagram of one illustrative example of a handheld or mobile computing device that can be used as a user's or client's hand held device 16, in which the present system (or parts of it) can be deployed. For instance, a mobile device can be deployed in the operator compartment 116 of mobile machine 100 for use in generating, processing, or displaying the speed optimization outputs 406 or other items discussed above. FIGS. 25-26 are examples of handheld or mobile devices.

FIG. 24 provides a general block diagram of the components of a client device 16 that can run some components shown in FIG. 7, that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from other figures) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, contact or phone book application 43, client system 24, data store 37, communication drivers 39, and communication configuration settings 41. Memory 21 can include all types of tangible volatile and non-volatile computer-readable memory devices. Memory 21 may also include computer storage media (described below). Memory 21 stores computer readable instructions that, when executed by processor 17, cause the processor to perform computer-implemented steps or functions according to the instructions. Processor 17 may be activated by other components to facilitate their functionality as well.

FIG. 25 shows one example in which device 16 is a tablet computer 1200. In FIG. 25, computer 1200 is shown with user interface display screen 1202. Screen 1202 can be a touch screen or a pen-enabled interface that receives inputs from a pen or stylus. Tablet computer 1200 may also use an on-screen virtual keyboard. Of course, computer 1200 might also be attached to a keyboard or other user input device through a suitable attachment mechanism, such as a wireless link or USB port, for instance. Computer 1200 may also illustratively receive voice inputs as well.

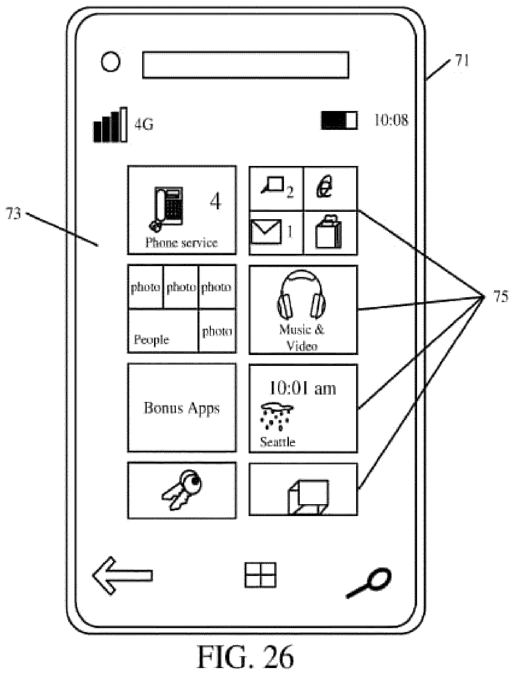

FIG. 26 is similar to FIG. 25 except that the device is a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

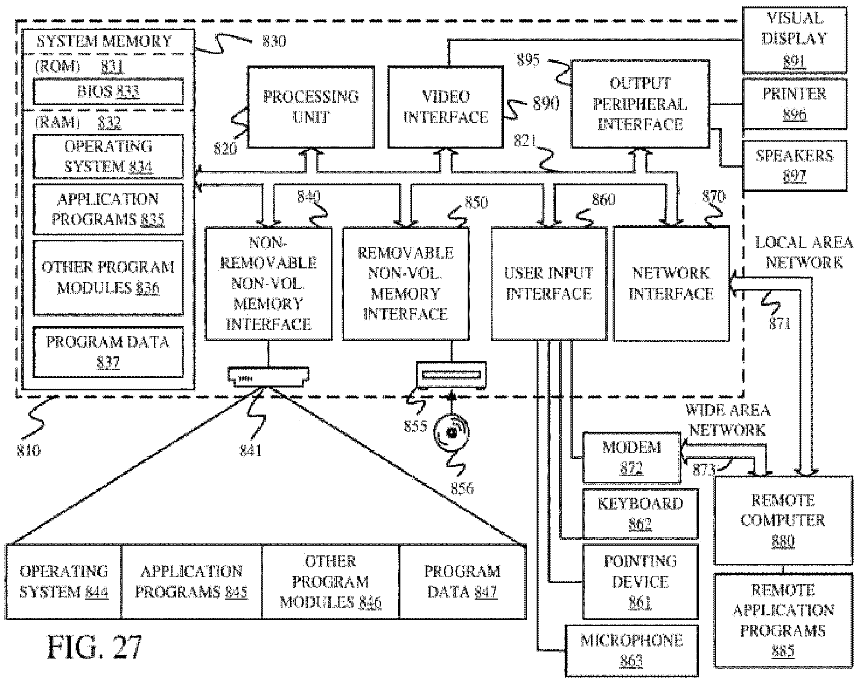

FIG. 27 is one example of a computing environment in which elements of FIG. 7 can be deployed. With reference to FIG. 27, an example system for implementing some embodiments includes a computing device in the form of a computer 810 programmed to operate as discussed above. Components of computer 810 may include, but are not limited to, a processing unit 820 (which can comprise processors or servers from previous figures), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to FIG. 7 can be deployed in corresponding portions of FIG. 27.

Computer 810 typically includes a variety of computer readable media. Computer readable media may be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. Computer readable media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal. The system memory 830 includes computer storage media in the form of volatile and/or nonvolatile memory or both such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data or program modules or both that are immediately accessible to and/or presently being operated on by processing unit 820. By way of example, and not limitation, FIG. 27 illustrates operating system 834, application programs 835, other program modules 836, and program data 837.

The computer 810 may also include other removable/non-removable volatile/nonvolatile computer storage media. By way of example only, FIG. 27 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 27, provide storage of computer readable instructions, data structures, program modules and other data for the computer 810. In FIG. 27, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 27 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of the claims.

## Claims

1. An agricultural system (300) comprising:
one or more job quality sensors (180) each of the one or more job quality sensors (180) configured to detect a respective job quality characteristic value of a job performed by a mobile agricultural machine (100);
a speed sensor (325) configured to detect a travel speed of the mobile agricultural machine (100); and
one or more processors (301); and
a data store (302) configured to store computer executable instructions that when executed by the one or more processors (301) are configured to cause the one or more processors (301) to:
determine (520) an optimal travel speed (430, 432) of the mobile agricultural machine (100) based on the one or more respective job quality characteristic values, detected by the one or more job quality sensors (180), and a respective job quality characteristic value threshold (360) for each of the one or more respective job quality characteristic values; and
generate (522) a control signal based on the determined optimal travel speed and the detected travel speed of the mobile agricultural machine (100), **characterized in that** the computer executable instructions that when executed by the one or more processors (301) are configured to cause the one or more processors (301) to further:
obtain (508, 514) one or more environmental limits (364); and
generate (522) the control signal based on the determined optimal travel speed, the detected travel speed of the mobile agricultural machine (100), and the one or more environmental limits,
wherein environmental limits (364) are limits on the travel speed of mobile machine (100) due to characteristics of the environment in which mobile machine (100) is operating, and wherein the environmental limits (364) include map data of the worksite at which the machine (100) is operating.

2. The agricultural system of claim 1, wherein the mobile agricultural machine (100) comprises a mobile agricultural planting machine (101) that includes an assistive seed delivery mechanism (166) that is configured to physically move to carry a seed from a seed metering system (124, 189) to an outlet (210) through which the seed is to travel to be delivered to a furrow.

3. The agricultural system of claim 1 or 2, wherein the one or more job quality sensors (180) comprise one of:
a down force margin sensor (380) configured to detect, as a respective job quality characteristic value, a down force margin value;
an implement ride quality (382) sensor configured to detect, as a respective job quality characteristic value, an implement ride quality value;
a percent ground contact sensor (384) configured to detect, as a respective job quality characteristic value, a percent ground contact value;
an applied down force sensor (386) configured to detect, as a respective job quality characteristic value, an applied down force value;
a seed singulation sensor (388) configured to detect, as a respective job quality characteristic value, a seed singulation value;
a seed spacing sensor (388) configured to detect, as a respective job quality characteristic value, a seed spacing value; or
a seed population sensor (388) configured to detect, as a respective job quality characteristic, a seed population value.

4. The agricultural system of one of the claims 1 to 3, wherein the computer executable instructions when executed by the one or more processors (301) are configured to cause the one or more processors (301) to further:
obtain (508) one or more system limits (362); and
generate (522) the control signal based on the determined optimal travel speed, the detected travel speed of the mobile agricultural machine (100), and the one or more system limits.

5. The agricultural system of claim 4, wherein the one or more system limits (362) comprise an operator preferred or user preferred travel speed threshold and wherein the computer executable instructions that when executed by the one or more processors (301) are configured to cause the one or more processors (301) to further:
generate (522) the control signal based on the determined optimal travel speed, the detected travel speed of the mobile agricultural machine (100), and the operator preferred or user preferred travel speed threshold.

6. The agricultural system of one of the claims 1 to 5, wherein the computer executable instructions that when executed by the one or more processors (301) are configured to cause the one or more processors (301) to further:
obtain (508, 516) one or more external limits (366); and
generate (522) the control signal based on the determined optimal travel speed, the detected travel speed of the mobile agricultural machine (100), and the one or more external limits.

7. The agricultural system of one of the claims 1 to 6, wherein the control signal controls a propulsion subsystem (350) to control a speed of the mobile agricultural machine (100) or controls an interface mechanism (318, 364) to provide an indication.

8. The agricultural system of claim 7, wherein the indication comprises an interface display (600), the interface display comprising:
a speed optimization display portion (608) that includes graphical display element (622) configured to indicate a status or a recommendation and a textual display element (624) configured to indicate a status or a recommendation; and
a job quality display portion (606) that includes one or more job quality characteristic indicators (625, 636) , each job quality characteristic indicator indicating a respective job quality characteristic, and one or more job quality indicators (627, 640), each of the one or more job quality indicators associated with a respective one of the one or more job quality characteristic indicators and indicating the respective job quality characteristic value of the associated job quality characteristic relative to the respective job quality characteristic threshold value for the respective job quality characteristic value.

## Patentansprüche

1. Landwirtschaftliches System (300), umfassend:
einen oder mehrere Auftragsqualitätssensoren (180), wobei jeder des einen oder der mehreren Auftragsqualitätssensoren (180) dazu ausgelegt ist, einen jeweiligen Auftragsqualitätscharakteristikwert eines Auftrags zu detektieren, der durch eine mobile landwirtschaftliche Maschine (100) durchgeführt wird;
einen Geschwindigkeitssensor (325), der dazu ausgelegt ist, eine Fahrgeschwindigkeit der mobilen landwirtschaftlichen Maschine (100) zu detektieren; und
einen oder mehrere Prozessoren (301); und
einen Datenspeicher (302), der dazu ausgelegt ist, computerausführbare Anweisungen zu speichern, die, wenn sie durch den einen oder die mehreren Prozessoren (301) ausgeführt werden, dazu ausgelegt sind, den einen oder die mehreren Prozessoren (301) zu veranlassen zum:
Bestimmen (520) einer optimalen Fahrgeschwindigkeit (430, 432) der mobilen landwirtschaftlichen Maschine (100) basierend auf dem einen oder den mehreren jeweiligen Auftragsqualitätscharakteristikwerten, die durch den einen oder die mehreren Auftragsqualitätssensoren (180) detektiert werden, und einer jeweiligen Auftragsqualitätscharakteristikwertschwelle (360) für jeden des einen oder der mehreren jeweiligen Auftragsqualitätscharakteristikwerte; und
Erzeugen (522) eines Steuersignals basierend auf der bestimmten optimalen Fahrgeschwindigkeit und der detektierten Fahrgeschwindigkeit der mobilen landwirtschaftlichen Maschine (100), **dadurch gekennzeichnet, dass**
die computerausführbaren Anweisungen, wenn sie durch den einen oder die mehreren Prozessoren (301) ausgeführt werden, dazu ausgelegt sind, den einen oder die mehreren Prozessoren (301) ferner zu veranlassen zum:
Erhalten (508, 514) einer oder mehrerer Umgebungsgrenzen (364); und
Erzeugen (522) des Steuersignals basierend auf der bestimmten optimalen Fahrgeschwindigkeit, der detektierten Fahrgeschwindigkeit der mobilen landwirtschaftlichen Maschine (100) und der einen oder den mehreren Umgebungsgrenzen,
wobei Umgebungsgrenzen (364) Grenzen für die Fahrgeschwindigkeit der mobilen Maschine (100) aufgrund von Charakteristiken der Umgebung sind, in der die mobile Maschine (100) betrieben wird, und wobei die Umgebungsgrenzen (364) Kartendaten der Arbeitsstätte beinhalten, an der die Maschine (100) betrieben wird.

2. Landwirtschaftliches System nach Anspruch 1, wobei die mobile landwirtschaftliche Maschine (100) eine mobile landwirtschaftliche Pflanzmaschine (101) umfasst, die einen unterstützenden Saatgutabgabemechanismus (166) beinhaltet, der dazu ausgelegt ist, sich physisch zu bewegen, um ein Saatgut von einem Saatgutdosiersystem (124, 189) zu einem Auslass (210) zu transportieren, durch den das Saatgut zur Abgabe zu einer Furche zu transportieren ist.

3. Landwirtschaftliches System nach Anspruch 1 oder 2, wobei der eine oder die mehreren Auftragsqualitätssensoren (180) eines von Folgendem umfassen:
einen Abwärtskraftspielraumsensor (380), der dazu ausgelegt ist, als einen jeweiligen Auftragsqualitätscharakteristikwert einen Abwärtskraftspielraumwert zu detektieren;
einen Arbeitsgerätefahrtqualitätssensor (382), der dazu ausgelegt ist, als einen jeweiligen Auftragsqualitätscharakteristikwert einen Arbeitsgerätefahrtqualitätswert zu detektieren;
einen Prozentualer-Bodenkontakt-Sensor (384), der dazu ausgelegt ist, als einen jeweiligen Auftragsqualitätscharakteristikwert einen prozentualen Bodenkontaktwert zu detektieren;
einen Aufgebrachte-Abwärtskraft-Sensor (386), der dazu ausgelegt ist, als einen jeweiligen Auftragsqualitätscharakteristikwert einen aufgebrachten Abwärtskraftwert zu detektieren;
einen Saatgut-Vereinzelungs-Sensor (388), der dazu ausgelegt ist, als einen jeweiligen Auftragsqualitätscharakteristikwert einen Saatgut-Vereinzelungs-Wert zu detektieren;
einen Saatgutabstandssensor (388), der dazu ausgelegt ist, als einen jeweiligen Auftragsqualitätscharakteristikwert einen Saatgutabstandswert zu detektieren; oder
einen Saatgutpopulationssensor (388), der dazu ausgelegt ist, als eine jeweilige Auftragsqualitätscharakteristik einen Saatgutpopulationswert zu detektieren.

4. Landwirtschaftliches System nach einem der Ansprüche 1 bis 3, wobei die computerausführbaren Anweisungen, wenn sie durch den einen oder die mehreren Prozessoren (301) ausgeführt werden, dazu ausgelegt sind, den einen oder die mehreren Prozessoren (301) ferner zu veranlassen zum:
Erhalten (508) einer oder mehrerer Systemgrenzen (362); und
Erzeugen (522) des Steuersignals basierend auf der bestimmten optimalen Fahrgeschwindigkeit, der detektierten Fahrgeschwindigkeit der mobilen landwirtschaftlichen Maschine (100) und der einen oder den mehreren Systemgrenzen.

5. Landwirtschaftliches System nach Anspruch 4, wobei die eine oder die mehreren Systemgrenzen (362) eine vom Bediener bevorzugte oder vom Benutzer bevorzugte Fahrgeschwindigkeitsschwelle umfassen und wobei die computerausführbaren Anweisungen, wenn sie durch den einen oder die mehreren Prozessoren (301) ausgeführt werden, dazu ausgelegt sind, den einen oder die mehreren Prozessoren (301) ferner zu veranlassen zum:
Erzeugen (522) des Steuersignals basierend auf der bestimmten optimalen Fahrgeschwindigkeit, der detektierten Fahrgeschwindigkeit der mobilen landwirtschaftlichen Maschine (100) und der vom Bediener bevorzugten oder vom Benutzer bevorzugten Fahrgeschwindigkeitsschwelle.

6. Landwirtschaftliches System nach einem der Ansprüche 1 bis 5, wobei die computerausführbaren Anweisungen, wenn sie durch den einen oder die mehreren Prozessoren (301) ausgeführt werden, dazu ausgelegt sind, den einen oder die mehreren Prozessoren (301) ferner zu veranlassen zum:
Erhalten (508, 516) einer oder mehrerer externer Grenzen (366); und
Erzeugen (522) des Steuersignals basierend auf der bestimmten optimalen Fahrgeschwindigkeit, der detektierten Fahrgeschwindigkeit der mobilen landwirtschaftlichen Maschine (100) und der einen oder den mehreren externen Grenzen.

7. Landwirtschaftliches System nach einem der Ansprüche 1 bis 6, wobei das Steuersignal ein Antriebsuntersystem (350) steuert, um eine Geschwindigkeit der mobilen landwirtschaftlichen Maschine (100) zu steuern, oder einen Schnittstellenmechanismus (318, 364) steuert, um eine Angabe bereitzustellen.

8. Landwirtschaftliches System nach Anspruch 7, wobei die Angabe eine Schnittstellenanzeige (600) umfasst, wobei die Schnittstellenanzeige Folgendes umfasst:
einen Geschwindigkeitsoptimierungsanzeigeabschnitt (608), der ein grafisches Anzeigeelement (622), das dazu ausgelegt ist, einen Status oder eine Empfehlung anzugeben, und ein Textanzeigeelement (624), das dazu ausgelegt ist, einen Status oder eine Empfehlung anzugeben, beinhaltet; und
einen Auftragsqualitätsanzeigeabschnitt (606), der einen oder mehrere Auftragsqualitätscharakteristikindikatoren (625, 636), wobei jeder Auftragsqualitätscharakteristikindikator eine jeweilige Auftragsqualitätscharakteristik angibt, und einen oder mehrere Auftragsqualitätsindikatoren (627, 640) beinhaltet, wobei jeder des einen oder der mehreren Auftragsqualitätsindikatoren mit einem jeweiligen des einen oder der mehreren Auftragsqualitätscharakteristikindikatoren assoziiert ist und den jeweiligen Auftragsqualitätscharakteristikwert der assoziierten Auftragsqualitätscharakteristik relativ zu dem jeweiligen Auftragsqualitätscharakteristikschwellenwert für den jeweiligen Auftragsqualitätscharakteristikwert angibt.

## Revendications

1. Système agricole (300) comprenant :
un ou plusieurs capteurs (180) de qualité de travail, le ou chacun des capteurs (180) de qualité de travail étant configuré pour détecter une valeur caractéristique de qualité de travail respective d'un travail effectué par une machine agricole mobile (100) ;
un capteur (325) de vitesse configuré pour détecter une vitesse de déplacement de la machine agricole mobile (100) ;
un ou plusieurs processeurs (301) ; et
un magasin (302) de données configuré pour stocker des instructions exécutables par ordinateur qui, lorsqu'elles sont exécutées par le ou les processeurs (301), sont configurées pour amener le ou les processeurs (301) à :
déterminer (520) une vitesse de déplacement optimale (430, 432) de la machine agricole mobile (100) sur la base de la ou des valeurs caractéristiques de qualité de travail respectives, détectées par le ou les capteurs (180) de qualité de travail, et un seuil respectif (360) de valeur caractéristique de qualité de travail pour chacune des valeurs caractéristiques de qualité de travail respectives ; et
générer (522) un signal de commande basé sur la vitesse de déplacement optimale déterminée et la vitesse de déplacement détectée de la machine agricole mobile (100), **caractérisé en ce que**
les instructions exécutables par ordinateur, lorsqu'elles sont exécutées par le ou les processeurs (301), sont configurées pour amener en outre le ou les processeurs (301) à :
obtenir (508, 514) une ou plusieurs limites environnementales (364) ; et
générer (522) le signal de commande sur la base de la vitesse de déplacement optimale déterminée, de la vitesse de déplacement détectée de la machine agricole mobile (100) et de la ou des limites environnementales,
les limites environnementales (364) étant des limites de vitesse de déplacement de la machine mobile (100) dues à des caractéristiques de l'environnement dans lequel la machine mobile (100) fonctionne, et les limites environnementales (364) comprenant des données cartographiques du site de travail sur lequel la machine (100) fonctionne.

2. Système agricole selon la revendication 1, la machine agricole mobile (100) comprenant une machine agricole mobile (101) de plantation qui comporte un mécanisme (166) d'assistance d'amenée de semences qui est configuré pour se déplacer physiquement pour transporter une semence d'un système (124, 189) de dosage de semences jusqu'à une sortie (210) à travers laquelle la semence doit se déplacer pour être délivrée à un sillon.

3. Système agricole selon la revendication 1 ou 2, le ou les capteurs (180) de qualité de travail comprenant un capteur parmi :
un capteur (380) de marge de force d'appui configuré pour détecter, en tant que valeur caractéristique de qualité de travail respective, une valeur de marge de force d'appui ;
un capteur (382) de qualité de roulement d'outil configuré pour détecter, en tant que valeur caractéristique de qualité de travail respective, une valeur de qualité de roulement d'outil ;
un capteur (384) de pourcentage de contact au sol configuré pour détecter, en tant que valeur caractéristique de qualité de travail respective, une valeur de pourcentage de contact au sol ;
un capteur (386) de force d'appui appliquée configuré pour détecter, en tant que valeur caractéristique de qualité de travail respective, une valeur de force d'appui appliquée ;
un capteur (388) d'individualisation de semences configuré pour détecter comme valeur caractéristique de qualité de travail respective, une valeur d'individualisation de semences ;
un capteur (388) d'espacement de semences configuré pour détecter, en tant que valeur caractéristique de qualité de travail respective, une valeur d'espacement de semences ; ou
un capteur (388) de peuplement de semences configuré pour détecter, en tant que caractéristique de qualité de travail respective, une valeur de peuplement de semences.

4. Système agricole selon une des revendications 1 à 3, les instructions exécutables par ordinateur, lorsqu'elles sont exécutées par le ou les processeurs (301), étant configurées pour amener en outre le ou les processeurs (301) à :
obtenir (508) une ou plusieurs limites (362) du système ; et
générer (522) le signal de commande sur la base de la vitesse de déplacement optimale déterminée, de la vitesse de déplacement détectée de la machine agricole mobile (100) et de la ou des limites du système.

5. Système agricole selon la revendication 4, la ou les limites (362) du système comprenant un seuil de vitesse de déplacement préféré par l'opérateur ou préféré par l'utilisateur et les instructions exécutables par ordinateur, lorsqu'elles sont exécutées par le ou les processeurs (301) étant configurées pour amener en outre le ou les processeurs (301) à :
générer (522) le signal de commande sur la base de la vitesse de déplacement optimale déterminée, de la vitesse de déplacement détectée de la machine agricole mobile (100) et du seuil de vitesse de déplacement préféré par l'opérateur ou préféré par l'utilisateur.

6. Système agricole selon une des revendications 1 à 5, les instructions exécutables par ordinateur, lorsqu'elles sont exécutées par le ou les processeurs (301), étant configurées pour amener en outre le ou les processeurs (301) à :
obtenir (508, 516) une ou plusieurs limites externes (366) ; et
générer (522) le signal de commande sur la base de la vitesse de déplacement optimale déterminée, de la vitesse de déplacement détectée de la machine agricole mobile (100) et de la ou des limites externes.

7. Système agricole selon l'une des revendications 1 à 6, le signal de commande commandant un sous-système (350) de propulsion pour commander une vitesse de la machine agricole mobile (100) ou commandant un mécanisme (318, 364) d'interface pour fournir une indication.

8. Système agricole selon la revendication 7, l'indication comprenant un affichage (600) d'interface, l'écran d'interface comprenant :
une partie (608) d'affichage d'optimisation de vitesse qui comprend un élément (622) d'affichage graphique configuré pour indiquer un état ou une recommandation et un élément (624) d'affichage textuel configuré pour indiquer un état ou une recommandation ; et
une partie (606) d'affichage de qualité de travail qui comprend un ou plusieurs indicateurs (625, 636) de caractéristiques de qualité de travail, chaque indicateur de caractéristiques de qualité de travail indiquant une caractéristique de qualité de travail respective, et un ou plusieurs indicateurs (627, 640) de qualité de travail, le ou chacun des indicateurs de qualité de travail étant associé à un indicateur respectif parmi le ou les indicateurs de caractéristiques de qualité de travail et indiquant la valeur caractéristique de qualité de travail respective de la caractéristique de qualité de travail associée par rapport à la valeur seuil caractéristique de qualité de travail respective pour la valeur caractéristique de qualité de travail respective.
